# EUROPEAN PATENT APPLICATION

(11) **EP 4 568 137 A1**
(43) Date of publication of application: **11.06.2025**
(21) Application number: 24218048.7
(22) Date of filing: 06.12.2024
(51) Int. Cl.: H04B 7/185, H04W 40/28

(54) **APPARATUS AND METHOD FOR PROVIDING LINK BETWEEN SATELLITE AND SATELLITE IN NON-TERRESTRIAL NETWORK**

(30) Priority: 06.12.2023 KR 20230176047; 20.11.2024 KR 20240166764
(71) Applicant: Thinkware Corporation, Seongnam-si, Gyeonggi-do 13493 (KR)
(72) Inventor: HAN, Taekyu, Seongnam-si, Gyeonggi-do (KR); LIM, Donghee, Seongnam-si, Gyeonggi-do (KR); KIM, Daewon, Seongnam-si, Gyeonggi-do (KR)
(74) Representative: BCKIP Part mbB

(57) **Abstract**

In embodiments, an apparatus of a satellite for providing a non-terrestrial network (NTN) access is provided. The apparatus includes memory storing instructions, at least one processor, and at least one transceiver. The instructions, when executed by the at least one processor, causes the apparatus to receive, from a terminal through the at least one transceiver, a request message for a call connection, identify a target satellite corresponding to a target terminal of the request message, determine whether a direct link to the target terminal is available, in a case that the direct link to the terminal is available, transmit, to the target satellite through the at least one transceiver, an indication message for a call connection between the terminal and the target terminal, in a case that the direct link to the terminal is not available, identify a second satellite capable of forming a direct link with the satellite, and transmit, to the second satellite through the at least one transceiver, the indication message.

## Description

### [Technical Field]

The present disclosure generally relates to a non-terrestrial network (NTN) that provides wireless communication service through a satellite positioned in an orbit of the earth or an aerial vehicle flying at high altitude, instead of a base station on the ground, and in particular, focuses on providing a link between satellites.

### [Background Art]

In order to complement a terrestrial network that provides a wireless communication system a non-terrestrial network (NTN) has been introduced. The non-terrestrial network may provide communication service even in an area where the terrestrial network is difficult to build or in a disaster situation. In addition, due to a recent decrease in a satellite launch cost, an access network environment may be provided efficiently.

### [Disclosure]

### [Technical Solution]

In embodiments, an apparatus of a satellite for providing a non-terrestrial network (NTN) access is provided. The apparatus may comprise memory storing instructions, at least one processor, and at least one transceiver. The instructions, when executed by the at least one processor, may cause the apparatus to receive, from a terminal through the at least one transceiver, a request message for a call connection, identify a target satellite corresponding to a target terminal of the request message, determine whether a direct link to the target terminal is available or not, in a case that the direct link to the terminal is available, transmit, to the target satellite through the at least one transceiver, an indication message for a call connection between the terminal and the target terminal, in a case that the direct link to the terminal is not available, identify a second satellite capable of forming a direct link with the satellite, and transmit, to the second satellite through the at least one transceiver, the indication message.

In embodiments, a method performed by a satellite for providing a non-terrestrial network (NTN) access is provided. The method may comprise receiving, from a terminal, a request message for a call connection, identifying a target satellite corresponding to a target terminal of the request message, determining whether a direct link to the target terminal is available or not, in a case that the direct link to the terminal is available, transmitting, to the target satellite, an indication message for a call connection between the terminal and the target terminal, in a case that the direct link to the terminal is not available, identifying a second satellite capable of forming a direct link with the satellite, and transmitting, to the second satellite, the indication message.

In embodiments, a non-transitory storage medium is provided. Memory storing instructions may be included. The instructions, when executed by a processor of the satellite, may cause the satellite to receive, from a terminal, a request message for a call connection, identify a target satellite corresponding to a target terminal of the request message, determine whether a direct link to the target terminal is available or not, in a case that the direct link to the terminal is available, transmit, to the target satellite, an indication message for a call connection between the terminal and the target terminal, in a case that the direct link to the terminal is not available, identify a second satellite capable of forming a direct link with the satellite, and transmit, to the second satellite, the indication message.

### [Description of the Drawings]

FIG. 1 illustrates a wireless communication system.
FIGS. 2A and 2B illustrate an example of a non-terrestrial network (NTN).
FIG. 3A illustrates an example of a control plane (C-plane).
FIG. 3B illustrates an example of a user plane (U-plane).
FIG. 4 illustrates an example of a resource structure in a time-frequency domain in a wireless communication system.
FIG. 5 illustrates an example of a network structure for an NTN.
FIG. 6A illustrates an example of a control plane of a regenerative satellite.
FIG. 6B illustrates an example of a user plane of a regenerative satellite.
FIG. 7A illustrates a first example of an NTN scenario.
FIG. 7B illustrates an example of a satellite (a satellite as a non- terrestrial base station) handover.
FIG. 8 illustrates an example of a signal path using an inter-satellite link (ISL).
FIG. 9 illustrates an example of signaling using an ISL.
FIG. 10 illustrates an example of a satellite change according to orbital movement.
FIG. 11 illustrates an example of a path setting using an ISL.
FIG. 12 illustrates an example of an RRC configuration for path indication.
FIG. 13 illustrates an example of components of a satellite.
FIG. 14 illustrates an example of components of a terminal.

### [Mode for Invention]

Terms used in the present disclosure are used only to describe a specific embodiment, and may not be intended to limit a scope of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since various embodiments of the present disclosure include technology that uses both hardware and software, the various embodiments of the present disclosure do not exclude a software-based approach.

Terms referring to a signal (e.g., a signal, information, a message, or signaling), terms referring to a resource (e.g., a symbol, a slot, a subframe, a radio frame, a subcarrier, a resource element (RE), a resource block (RB), a bandwidth part (BWP), or an occasion), terms referring for a calculation state (e.g., a step, an operation, or a procedure), terms referring to data (e.g., a packet, a user stream, information, a bit, a symbol, or a codeword), terms referring to a channel, terms referring to a network entity, terms referring to a device component, and the like, used in the following description are exemplified for convenience of explanation. Therefore, the present disclosure is not limited to terms to be described below, and another term having an equivalent technical meaning may be used.

In the following description, a physical channel and a signal may be used interchangeably with data or a control signal. For example, a physical downlink shared channel (PDSCH) is a term referring to a physical channel through which data is transmitted, but the PDSCH may also be used to refer to data. That is, in the present disclosure, an expression 'transmitting a physical channel' may be interpreted equally to an expression 'transmitting data or a signal through a physical channel'.

Hereinafter, in the present disclosure, upper signaling indicates a signal transmission method transmitted from a base station to a terminal using a downlink data channel of a physical layer or from a terminal to the base station using an uplink data channel of a physical layer. The upper signaling may be understood as radio resource control (RRC) signaling or a MAC control element (hereinafter, referred to as a 'CE").

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' means at least one of elements from A (including A) to B (including B). Hereinafter, 'C' and/or 'D' means that at least one of 'C' or 'D', that is, {'C', 'D', 'C' and 'D'}.

In the present disclosure, a signal quality may be, for example, at least one of reference signal received power (RSRP), beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case in which a signal quality value related to a signal size is large or a signal quality value related to an error rate is small. When the signal quality is high, it may mean that a smooth wireless communication environment is guaranteed. In addition, an optimal beam may mean a beam having the highest signal quality among beams.

The present disclosure describes various embodiments using terms used in a portion of communication standards (e.g., 3rd Generation Partnership Project (3GPP) and European Telecommunications Standards Institute (ETSI)), but this is only an example for explanation. Various embodiments of the present disclosure may be easily modified and applied in another communication system.

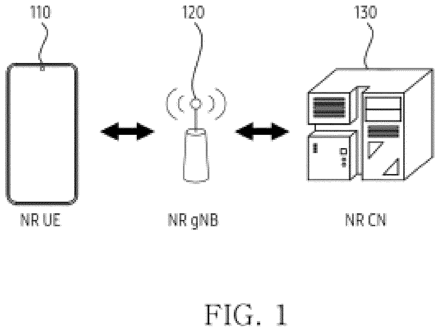

FIG. 1 illustrates a wireless communication system.

Referring to FIG. 1, FIG. 1 illustrates a terminal 110 and a base station 120 as a portion of nodes that utilize a wireless channel in a wireless communication system using New Radio (NR) as a wireless interface of Radio Access Technology (RAT). FIG. 1 illustrates only one base station, but the wireless communication system may further include another base station identical or similar to the base station (e.g., NR gNB) 120.

The terminal 110, which is an apparatus used by a user, communicates with the base station 120 through a wireless channel. A link from the base station 120 to the terminal 110 is referred to as a downlink (DL), and a link from the terminal 110 to the base station 120 is referred to as an uplink (UL). In addition, although not illustrated in FIG. 1, the terminal 110 and another terminal may communicate with each other through a wireless channel. At this time, a device-to-device link (D2D) between the terminal 110 and another terminal is referred to as a sidelink, and the sidelink may be used interchangeably with a PCS interface. In some other embodiments, the terminal 110 may be operated without user involvement. According to an embodiment, the terminal 110, which is an apparatus that performs machine type communication (MTC), may not be carried by a user. In addition, according to an embodiment, the terminal 110 may be a narrowband (NB)-internet of things (IoT) device.

In describing the systems and methods in the present specification, the terminal 110 may be an electronic device used to communicate voice and/or data to the base station 120, and the base station 120 may, in turn, communicate with a network (e.g., a public exchange telephone network (PSTN), the Internet, and the like) of devices.

In addition, the terminal 110 may be referred to as a terminal, 'user equipment (UE)', a 'vehicle', 'customer premises equipment (CPE)', a 'mobile station', a 'subscriber station', a 'remote terminal', a 'wireless terminal', an 'electronic device', a 'user device', an 'access terminal', a 'mobile terminal', a 'remote station', a 'user terminal', a 'subscriber unit', a 'mobile device', or another term having an equivalent technical meaning thereto.

Additionally, examples of terminals 110 include cellular phones, smart phones, personal digital assistants (PDAs), laptop computers, netbooks, e-readers, wireless modems, and the like. In 3GPP standards, the terminal 110 is typically referred to as UE. However, since scope disclosed in the present specification should not be limited to the 3GPP standards, terms "UE" and "terminal" may be used interchangeably in the present specification to mean a more general term "wireless communication device". The UE may also more generally be referred to as a terminal device.

The base station 120 is a network infrastructure that provides wireless access to the terminal 110. The base station 120 has coverage defined based on a distance at which a signal may be transmitted. In the 3GPP standards, the base station 120 may generally be referred to as a `node B', an `evolved node B (eBodeB, eNB)', a '5th generation node', a 'next generation nodeB (gNB)', a `home enhanced or evolved node B (HeNB)', an 'access point (AP)', a 'wireless point', a 'transmission/reception point (TRP)', or another term having an equivalent technical meaning thereto.

Since the scope disclosed in the present specification should not be limited to the 3GPP standards, terms "base station", "node B", "eNB", and "HeNB" may be used interchangeably in the present specification to mean a more general term "base station". In addition, a term "base station" may be used to indicate an access point. The access point may be an electronic device that provides access to a network (e.g., a local area network (LAN), the Internet, and the like) for wireless communication devices. A term "communication device" may be used to indicate both a wireless communication device and/or a base station. The eNB or the gNB may also more generally be referred to as a base station device.

The base station 120 may communicate with an NR Core Network (NR CN) entity 130. For example, a core network entity 130 may include an Access and Mobility Management Function (AMF) that is in charge of a control plane such as terminal 110 access, a mobility control function, and the like, and a User Plane Function (UPF) that is in charge of a control function for user data.

The terminal 110 may perform beamforming with the base station 120. The terminal 110 and the base station 120 may transmit and receive a wireless signal in a relatively low frequency band (e.g., a frequency range 1 (FR 1) of the NR). In addition, the terminal 110 and the base station 120 may transmit and receive a wireless signal in a relatively high frequency band (e.g., a FR 2 (or, a FR 2-1, a FR 2-2, a FR 2-3), or a FR 3 of the NR), a millimeter wave (mmWave) band (e.g., 28 GHz, 30 GHz, 38 GHz, or 60 GHz)). In order to improve a channel gain, the terminal 110 and the base station 120 may perform the beamforming. Herein, the beamforming may include transmission beamforming and reception beamforming. The terminal 110 and the base station 120 may assign directivity to a transmission signal or a reception signal. To this end, the terminal 110 and the base station 120 may select serving beams through a beam search or a beam management procedure. After the serving beams are selected, subsequent communication may be performed through a resource that is in a Quasi Co-Location (QCL) relationship with a resource transmitting the serving beams.

If large-scale characteristics of a channel transferring a symbol on a first antenna port may be inferred from a channel transferring a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

Both the terminal 110 and the base station 120 may perform the beamforming, but embodiments of the present disclosure are not necessarily limited thereto. In some embodiments, the terminal 110 may or may not perform the beamforming. In addition, the base station 120 may or may not perform the beamforming. That is, only one of the terminal 110 and the base station 120 may perform the beamforming, or both the terminal 110 and the base station 120 may not perform the beamforming.

In the present disclosure, a beam, which means a spatial flow of a signal in a wireless channel, may be formed by one or more antennas (or antenna elements), and this formation process may be referred to as the beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an information element (IE) such as a CSI-RS resource or an SRS-resource may be used, and this configuration may include information associated with the beam. The information associated with the beam may mean whether a corresponding configuration (e.g., a CSI-RS resource) uses the same spatial domain filter as another configuration (e.g., another CSI-RS resource in the same CSI-RS resource set), or another spatial domain filter, or which reference signal is quasi-co-located (QCL) with, and if it is QCL, which type (e.g., QCL type A, B, C, and D).

Hereinafter, in order to describe embodiments, a terminal may be referred to as UE 110, and a base station may be referred to as a gNB 120.

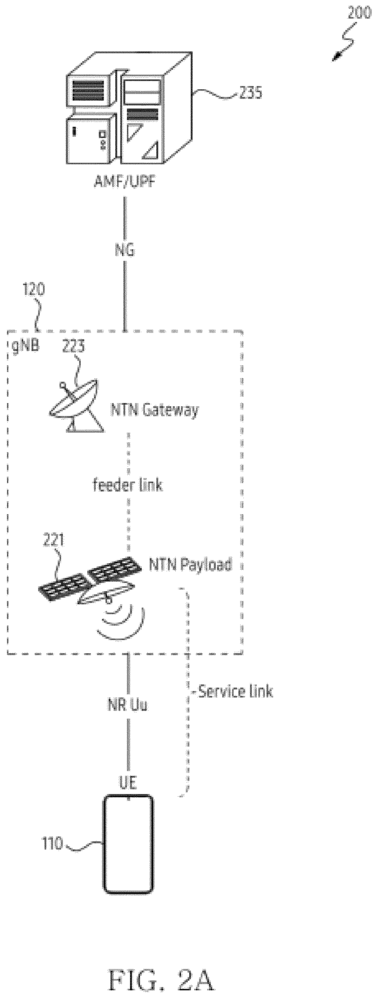

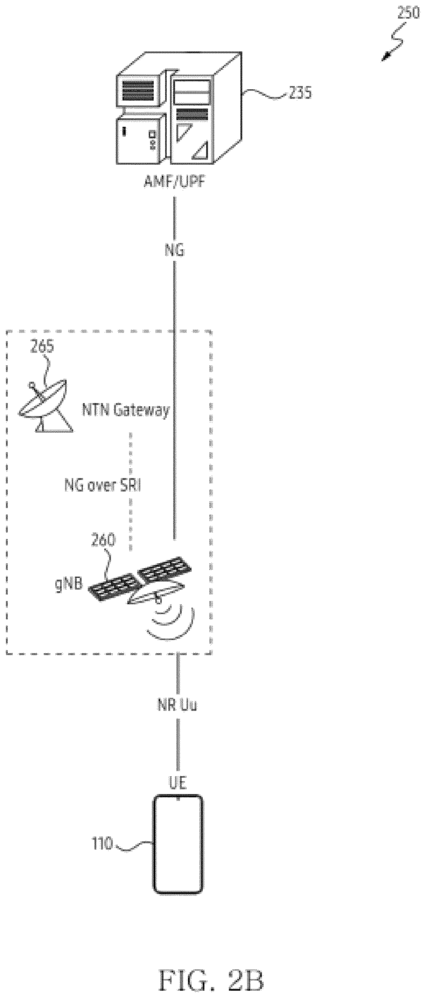

FIGS. 2A and 2B illustrate an example of a non-terrestrial network (NTN). In FIG. 2A, an example of the non-terrestrial network (NTN) using a transparent satellite is illustrated. In FIG. 2B, an example of the non-terrestrial network (NTN) using a regenerative satellite is illustrated. The NTN means a NG-RAN that provides non-terrestrial NR access to UE (e.g., UE 110) through an NTN payload and an NTN gateway mounted on an airborne or space-borne NTN vehicle. The NG-RAN may include one or more gNBs (e.g., a gNB 120).

Referring to FIG. 2A, an NTN 200 indicates a network environment according to the transparent satellite. The NTN 200, which is the gNB 120, may include an NTN payload 221 and an NTN gateway 223. The NTN payload 221 is a network node mounted on a satellite or a high altitude platform station (HAPS) that provides a connection function between a service link (described later) and a feeder link (described later). The NTN gateway 223 is an earth station disposed on a surface of the earth that provides a connection to the NTN payload 221 using the feeder link. The NTN gateway 223 is a transport network layer (TNL) node. The NTN 200 may provide the non-terrestrial NR access to the UE 110. The NTN 200 may provide the non-terrestrial NR access to the UE 110 through the NTN payload 221 and the NTN gateway 223. A link between the NTN payload 221 and the UE 110 may be referred to as the service link. A link between the NTN gateway 223 and the NTN payload 221 may be referred to as the feeder link. The feeder link may correspond to a wireless link.

The NTN payload 221 may receive wireless protocol data from the UE 110 through the service link. The NTN payload 221 may transparently transmit the wireless protocol data to the NTN gateway 223 through the feeder link. Accordingly, the NTN payload 221 and the NTN gateway 223 may be seen as one gNB 120 from a perspective of the UE 110. The NTN payload 221 and the NTN gateway 223 may communicate with the UE 110 through a Uu interface, which is a general wireless protocol. That is, the NTN payload 221 and the NTN gateway 223 may perform wireless protocol communication with the UE 110 like one gNB 120. The NTN gateway 223 may communicate with a core network entity 235 (AMF or UPF) through an NG interface.

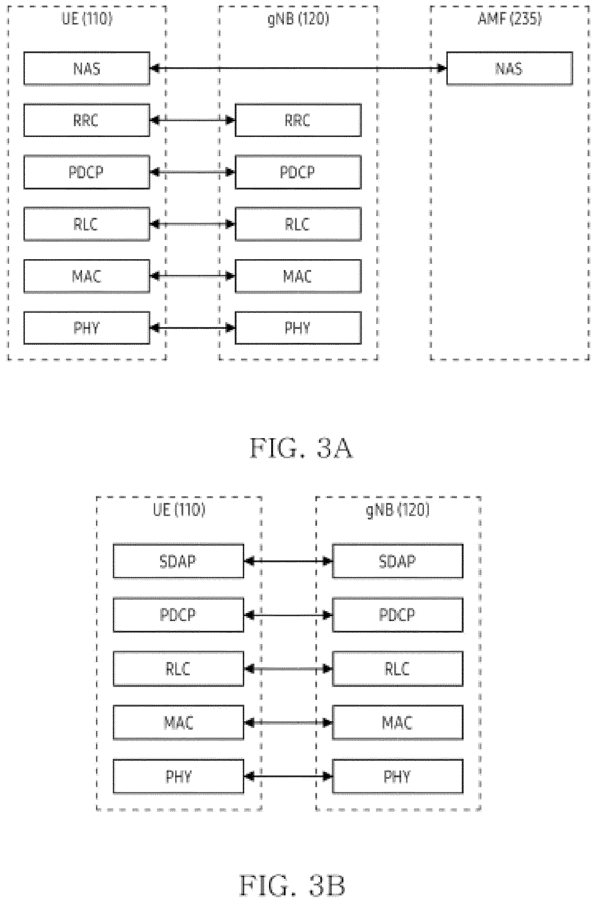

According to an embodiment, the NTN payload 221 and the NTN gateway 223 may use a wireless protocol stack in a control plane of FIG. 3A to be described later. In addition, according to an embodiment, the NTN payload 221 and the NTN gateway 223 may use the wireless protocol stack in a user plane of FIG. 3B.

In FIG. 2A, one NTN payload 221 and one NTN gateway 223 included in the gNB 120 are described, but the embodiments of the present disclosure are not limited thereto. For example, a gNB may include a plurality of NTN payloads. In addition, for example, an NTN payload may be provided by a plurality of gNBs. That is, an implementation scenario illustrated in FIG. 2A is an example and does not limit the embodiments of the present disclosure.

Referring to FIG. 2B, an NTN 250 indicates a network environment according to the regenerative satellite. The NTN 250 may include a satellite 260 operating as the gNB 120. The satellite 260 indicates a space-borne vehicle equipped with a regenerative payload communication transmitter disposed in a low-earth orbit (LEO), a medium-earth orbit (MEO), or a geostationary earth orbit (GEO). The satellite 260 may be referred to as a regenerative payload or a regenerative satellite. The satellite 260 may indicate a payload configured to convert and amplify an uplink RF signal before transmitting the uplink RF signal to a downlink, and the conversion of the signal may mean digital processing capable of including demodulation, decoding, re-encoding, re-modulation and/or filtering. The NTN 250 may include an NTN gateway 265, which is an entity connected to the satellite 260 and disposed on the ground. The NTN gateway 265 is an earth station, disposed on a surface of the earth, that provides a connection to the satellite 260 using the feeder link. The NTN 250 may provide the non-terrestrial NR access to the UE 110. The NTN 250 may provide the non-terrestrial NR access to the UE 110 through the satellite 260 and the NTN gateway 265.

The satellite 260 may be configured to regenerate signals received from the Earth. The Uu interface may be defined between the satellite 260 and the terminal 110. A satellite radio interface (SRI) on the feeder link may be defined between the satellite 260 and the NTN gateway 265. Although not illustrated in FIG. 2B, the satellite 260 may provide inter-satellite links (ISL) between satellites. The ISL may be a transmission link between satellites, and an ISL may be a 3GPP, or a wireless interface (e.g., an XN interface) or an optical interface, in which 3GPP is not defined. The satellite 260 may communicate with the core network entity 235 (AMF or UPF) through an NG interface, based on the NTN gateway 265. According to an embodiment, the satellite 260 may use the wireless protocol stack in the control plane of FIG. 3A to be described later. In addition, according to an embodiment, the satellite 260 may use the wireless protocol stack in the user plane of FIG. 3B.

In FIG. 2B, the satellite 260 operating as the gNB 120 is described, but embodiments of the present disclosure are not limited thereto. The gNB 120 according to embodiments may be implemented as a distributed deployment using a centralized unit (CU) configured to perform a function of upper layers (e.g., packet data convergence protocol (PDCP), or radio resource control (RRC)) of an access network and a distributed unit (DU) configured to perform a function of lower layers. An interface between the CU and the distributed unit (DU) may be referred to as an F1 interface. The centralized unit (CU) may be in charge of a function of a layer upper than the DU, by being connected to one or more DUs. For example, the CU may be in charge of a function of radio resource control (RRC) and packet data convergence protocol (PDCP) layers, and the DU and a radio unit (RU) may be in charge of a function of a lower layer. The DU may be in charge of a function of radio link control (RLC), media access control (MAC), and physical (PHY) layers. In this distributed deployment, the satellite 260 may be used as the CU or the DU constituting the gNB 120.

FIG. 3A illustrates an example of a control plane (C-plane). Hereinafter, at least a portion of descriptions of a gNB 120 may be understood as pertaining to a satellite 260.

Referring to FIG. 3A, in the C-plane, UE 110 and an AMF 235 may perform non-access stratum (NAS) signaling. In the C-plane, the UE 110 and the gNB 120 may communicate according to a protocol designated in each of a RRC layer, a PDCP layer, a RLC layer, a MAC layer, and a PHY layer.

In an NTN access, a main function of the RRC layer may include at least a portion of the following functions.
- Broadcasting system information related to Access Stratum (AS) and NAS
- Paging initiated by 5G Core (5GC) or Next Generation-Radio Access network (NG-RAN)
- Establishment, maintenance, and release of RRC connection between UE and NG-RAN, including, more specifically, control over RLC, MAC, and PHY, including:
   - Addition, modification and release of Carrier Aggregation
   - Addition, modification and release of dual connectivity between NR or E-UTRA and NR.
- Security function including Key Management;
- Establishment, configuration, maintenance and release of Signaling Radio Bearer (SRB) and Data Radio Bearer (DRB)
- Movement function including:
   - Transferring handover and context;
   - Control UE cell selection and reselection and cell selection and reselection;
   - Mobility between RATs.
- Quality of service (QoS) management function;
- UE measurement report and report control;
- Radio link failure detection and recovery
- Message transmission from/to UE to/from NAS.

In the NTN access, a main function of the PDCP layer may include at least a portion of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the NTN access, a main function of the RLC layer may include at least a portion of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the NTN access, the MAC layer may be connected to multiple RLC layer devices configured in a terminal, and a main function of the MAC may include at least a portion of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

In the NTN access, the physical layer may perform operations of channel coding and modulating upper layer data, converting into an OFDM symbol and transmitting it to a wireless channel, or demodulating and channel decoding the OFDM symbol received via the wireless channel and transmitting it to the upper layers.

FIG. 3B illustrates an example of a user plane (U-plane). Hereinafter, at least a portion of descriptions of the gNB 120 may be understood as pertaining to the satellite 260.

Referring to FIG. 3B, in the U-plane, UE 110 and a gNB 120 may perform communication according to a protocol designated in each of a SDAP layer, a PDCP layer, a RLC layer, a MAC layer, and a PHY layer. For the PDCP layer, the RLC layer, the MAC layer, and the PHY layer, except for the SDAP layer, the description of FIG. 3A may be referenced.

In the NTN access, the SDAP layer may provide a QoS flow of 5GC. A single protocol entity of a SDAP may be configured for each individual PDU session, and a function of the SDAP layer may include at least a portion of the following functions.
- Mapping between QoS flow and data radio bearer;
- Display of QoS flow identifier (ID) (QFI) in both DL and UL packets.

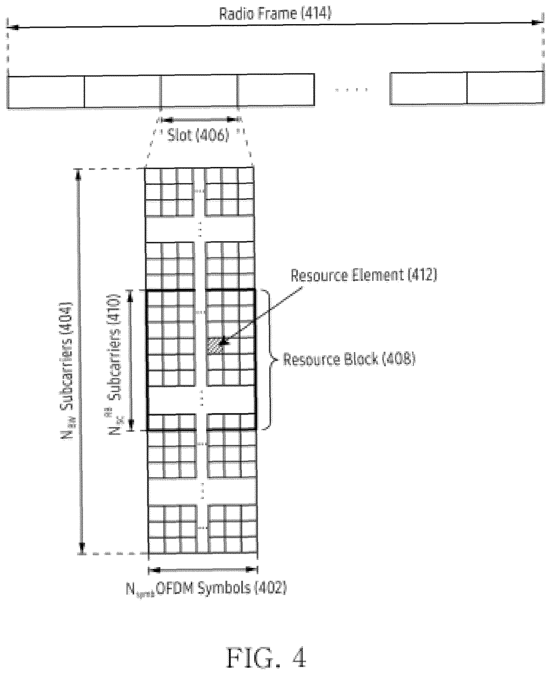

FIG. 4 illustrates an example of a resource structure of a time-frequency domain supported by a wireless communication system to which an embodiment proposed in the present specification may be applied. FIG. 4 illustrates a basic structure of a time-frequency domain, which is a radio resource domain in which data or a control channel is transmitted in a downlink or an uplink in a 5G NR system to which the present embodiment may be applied.

Referring to FIG. 4, a horizontal axis indicates a time domain, and a vertical axis indicates a frequency domain. A minimum transmission unit in the time domain is an OFDM symbol, and one slot 406 may be configured with N_{symb} OFDM symbols 402. Referring to FIG. 4, in the wireless communication system to which the present invention is applied, one radio frame 414 may be defined as having a length of 10 ms, which is configured with 10 subframes having the same length of 1 ms. Additionally, one radio frame 414 may be divided into 5 ms half-frame, and each half-frame includes 5 subframes. In FIG. 4, the slot 406 is configured with 14 OFDM symbols, but a length of a slot may vary according to subcarrier spacing. For example, in the case of Numerology having 15-khz subcarrier spacing, the slot is configured with a length of 1 ms, which is the same length as a subframe. In contrast, in the case of Numerology having a 30 kHz subcarrier spacing, the slot is configured with 14 OFDM symbols, but two slots may be included in one subframe with a length of 0.5 ms.

That is, a subframe and a frame are defined with a fixed time length, and a slot is defined as the number of symbols, so that a time length may vary according to the subcarrier spacing. Referring again to FIG. 4, a radio resource supported by the wireless communication system to which the invention proposed in the present specification may be applied may be configured with a symbol, which is a plurality of time resources, and a sub-carrier, which is a plurality of frequency resource, and each of the time resources and the frequency resources may be represented by a two-dimensional resource grid. In FIG. 4, one quadrilateral, which is the smallest physical resource being configured with one sub-carrier and one symbol in the resource grid, is referred to as a resource element (RE) 412.

In the wireless communication system to which the invention proposed in the present specification may be applied, a minimum transmission unit in the frequency domain is a subcarrier, and a carrier bandwidth constituting the resource grid is configured with N_{BW} subcarriers 404.

In a time-frequency domain, a basic unit of a resource, which is the resource element (hereinafter referred to as 'RE') 412, may be indicated as an OFDM symbol index and a subcarrier index. A resource block 408 may include a plurality of resource elements 412. In the wireless communication system to which the invention proposed in the present specification may be applied, the resource block 408 (or a physical resource block (hereinafter referred to as 'PRB')) may be defined as N_{symb} consecutive OFDM symbols in the time domain and N_{SC}^{RB} consecutive subcarriers in the frequency domain. In a NR system, the resource block (RB) 408 may be defined as N_{SC}^{RB} consecutive subcarriers 410 in the frequency domain. One RB 408 includes N_{SC}^{RB} REs 412 in a frequency axis.

In general, a minimum transmission unit of data is RB and the number of subcarriers is N_{SC}^{RB} =12. The frequency domain may include common resource blocks (CRBs). In a bandwidth part (BWP) on the frequency domain, a physical resource block (PRB) may be defined. The CRB and PRB numbers may be determined according to subcarrier spacing. A data rate may increase in proportion to the number of RBs scheduled to a terminal.

In the NR system, in the case of a frequency division duplex (FDD) system that operates a downlink and an uplink separately by frequency, a downlink transmission bandwidth and an uplink transmission bandwidth may be different from each other. A channel bandwidth indicates a radio frequency (RF) bandwidth corresponding to a system transmission bandwidth. Table 1 indicates a portion of a corresponding relationship between the system transmission bandwidth, the subcarrier spacing (SCS) and the channel bandwidth defined in the NR system in a frequency band (e.g., frequency range (FR) 1 (410 MHz to 7125 MHz)) lower than an upper limit (e.g., 7.125) GHz defined in a specification. Additionally, Table 2 indicates a portion of a corresponding relationship between a transmission bandwidth, the subcarrier spacing, and the channel bandwidth defined in the NR system in a frequency band (e.g., a FR2 (24250 MHz to 52600 MHz)) higher than a lower limit (e.g., 24.25 GHz) or a FR2-2 (52600 MHz - 71000 MHz) defined in a specification. For example, the transmission bandwidth of the NR system having a 100 MHz channel bandwidth at 30 kHz subcarrier spacing is configured with 273 RBs. In Table 1 and Table 2, N/A may be a bandwidth-subcarrier combination that is not supported by the NR system.

**[Table 1]**

| Channel bandwidth [MHz] | SCS | 5 | 10 | 20 | 50 | 80 | 100 |
|---|---|---|---|---|---|---|---|
| Transmission bandwidth configuration N_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| Channel bandwidth [MHz] | SCS | 50 | 100 | 200 | 400 |
|---|---|---|---|---|---|
| Transmission bandwidth configuration N_{RB} | 60kHz | 66 | 132 | 264 | N/A |
| | 120kHz | 32 | 66 | 132 | 264 |

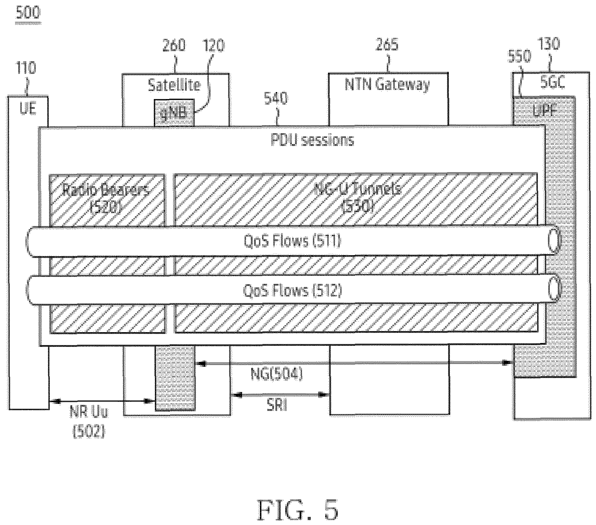

FIG. 5 illustrates an example of a network structure for an NTN. A satellite 260 may be mounted on a space vehicle or an aerial vehicle to provide a structure, power, a command, telemetry, posture control (corresponding HAPS) for a satellite, an appropriate thermal environment, and radiation shielding. In FIG. 5, an example in which the satellite 260, which is a regenerative payload, operates as a full base station (e.g., a gNB 120) is described.

Referring to FIG. 5, the satellite 260 may operate as the gNB 120. The gNB 120 may communicate with a terminal 110 or may communicate with a core network entity 130. In FIG. 5, a UPF 550 is illustrated as the core network entity 130. An NR Uu interface 502 may be used between the satellite 260 and the terminal 110. According to an embodiment, at least one radio bearer 520 may be generated between the satellite 260 and the terminal 110. For example, the radio bearer 520 may include a data radio bearer (DRB). For example, the radio bearer 520 may include a signaling radio bearer (SRB). An NG interface 504 may be used between the satellite 260 and a core network entity (e.g., AMF and UPF). For example, an N3 interface may be used between the satellite 260 and the UPF. For example, an N2 interface may be used between the satellite 260 and the AMF. According to an embodiment, a traffic tunnel may be generated between the satellite 260 and the core network entity 130. For example, an NG-U tunnel 530 may be generated between the satellite 260 and a UPF 550.

A packet data unit (PDU) session 540 may be generated between UE 110 and the core network entity 130 (e.g., the UPF 550). The PDU session 540 may be used to provide an end-to-end user plane connection between the terminal 110 and a data network through the UPF 550. The PDU session 540 may support one or more quality of service (QoS) flows. For example, the PDU session 540 may support a first QoS flow 511 and a second QoS flow 512. In a user plane, the radio bearer 520 may be mapped to a QoS flow (e.g., the first QoS flow 511 and the second QoS flow 512). According to an embodiment, the satellite 260, which is the gNB 120, may perform mapping between the DRB and the QoS flow.

Although not illustrated in FIG. 5, operation and maintenance (O&M) may be used to provide a wireless access network through the satellite 260. The O&M may provide one or more parameters related to an NTN 500 to the gNB 120 (e.g., the satellite 260). For example, operation and maintenance (O&M) 510 may provide at least following NTN related parameters to the gNB 120 for operation.
a) Earth fixed beams: for each beam provided by given NTN payload:
   - Cell identifier (NG and Uu) mapped to beam
   - Reference position (e.g., center and range of cell) of cell.
b) Quasi earth fixed beams: for each beam provided by given NTN payload:
   - Cell identifier (NG and Uu) and time window mapped to beam;
   - Reference position (e.g., center and range of cell) of cell/beam
   - Time window (feather link, service link) of continuous switch-over
   - Identifier and time window of all satellites and NTN gateways that provide service.
c) Earth moving beams: for each beam provided by given NTN payload:
   - Uu cell identifier mapped to beam, mapping information on fixed geographic area reported to NG, information on movement of foot-print of beam on the Earth;
   - Elevation for NTN payload;
   - Continuous service schedule of NTN gateways/gNBs;
   - Continuous switch-over schedule (feather link, service link).

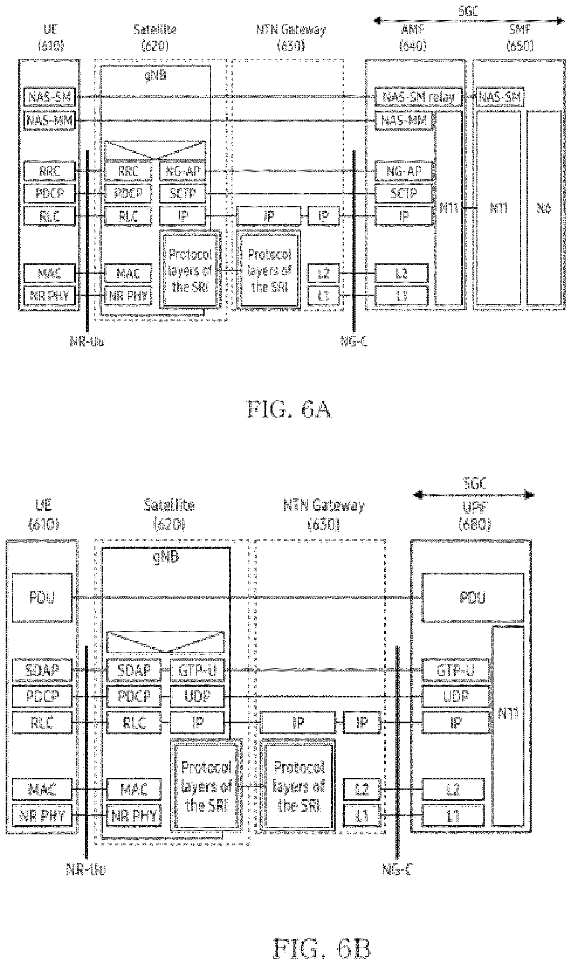

FIG. 6A illustrates an example of a control plane of a regenerative satellite (e.g., the satellite 260).

Referring to FIG. 6A, UE 610 may support a protocol of a PHY layer, a MAC layer, a RLC layer, a PDCP layer, and a RRC layer. A satellite 620, which is a gNB, may support the protocol of the PHY layer, the MAC layer, the RLC layer, the PDCP layer, and the RRC layer. For the satellite 620, a description of the satellite 260 may be referenced. A description of the protocol of each layer, the description of FIG. 3A may be referenced. An interface between the UE 610 and the satellite 620 may be a Uu interface.

The satellite 620, which is a gNB mounted on a board or a portion of the gNB, may perform an NG-RAN protocol function. The satellite 620 may perform communication (e.g., IP communication) with an NTN gateway 630 located on the ground through an SRI. The satellite 620 may access 5GC through the NTN gateway 630. As a network entity for the 5GC, an AMF 640 (e.g., AMF 235) and an SMF 650 are exemplified. The satellite 620 may support a protocol of an NG-AP layer, a stream control transmission protocol (SCTP) layer, and an IP layer for communication with the 5GC. The NG-AP layer may be used through an NTN gateway over a SCTP between the AMF 640, which is a 5GC entity, and the satellite 620. NAS signaling between the UE 610 and the AMF 640 may be performed through the satellite 620 and the NTN gateway 630. The NAS signaling may include a NAS-mobility management (NAS-MM) interface for the AMF 640. The NAS signaling may include a NAS-SM relay and/or a NAS- session management (SM) for the SMF 650. The NAS signaling may be transmitted through an NG-AP layer protocol between the AMF 640, which is the 5GC entity, and the satellite 620, via the NTN gateway 630.

In FIG. 6A, an example in which a satellite operates as a full gNB is described, but the embodiments of the present disclosure are not limited thereto. As a non-limiting example, the satellite may operate as a gNB-DU according to functional separation. Accordingly, the satellite may be configured to support a protocol of the RLC layer, the MAC layer, and the PHY layer.

FIG. 6B illustrates an example of a user plane of a regenerative satellite (e.g., the satellite 260).

Referring to FIG. 6B, the UE 610 may support a protocol of the PHY layer, the MAC layer, the RLC layer, the PDCP layer, and an SDAP layer. The satellite 620, which is the gNB, may support the protocol of the PHY layer, the MAC layer, the RLC layer, the PDCP layer, and the SDAP layer. As a description of the protocol of each layer, the description of FIG. 3B may be referenced. The interface between the UE 610 and the satellite 620 may be the Uu interface.

The satellite 620, which is the gNB mounted on a board, may perform the NG-RAN protocol function. The satellite 620 may perform communication (e.g., IP communication) with the NTN gateway 630 located on the ground through the SRI. The satellite 620 may access the 5GC through the NTN gateway 630. An UPF 680 is exemplified as the network entity for the 5GC. The satellite 620 may support protocols of a General Packet Radio Service (GPRS) tunneling protocol-user plane (GTP-U) layer, a user datagram protocol (UDP) layer, and the IP layer for communication with the 5GC. A PDU session (e.g., the PDU session 540 of FIG. 5) between the UE 610 and the UPF 680 may be generated. A protocol stack of the SRI may be used to transmit a UE user plane between a satellite and an NTN-gateway. Signals on the PDU session may be transmitted through the NTN gateway 630 between the UPF 680, which is the 5GC, and the satellite 620 via a GTP-U tunnel.

In FIG. 6B, an example in which a satellite operates as a full gNB is described, but the embodiments of the present disclosure are not limited thereto. As a non-limiting example, the satellite may operate as a gNB-DU according to functional separation. Accordingly, the satellite may be configured to support protocols of the RLC layer, the MAC layer, and the PHY layer.

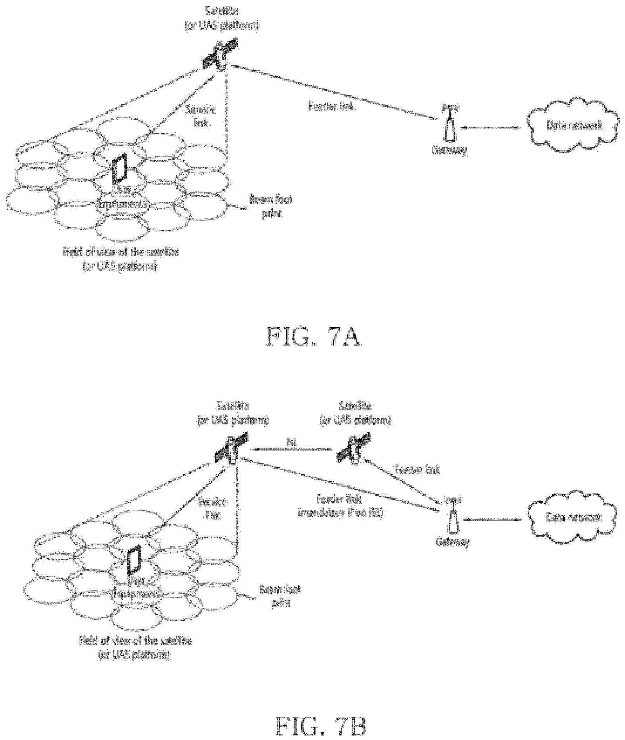

FIG. 7A illustrates a first example of an NTN scenario. In FIG. 7A, an NTN typical scenario based on a transparent payload is illustrated.

Referring to FIG. 7A, a satellite (or a UAS platform) may generate a service link with UE. The satellite (or the UAS platform) may be connected to a gateway through a feeder link. The satellite may be connected to a data network through the gateway. A beam footprint may mean an area where a signal transmitted by a satellite may be received.

The following drawings are illustrated to explain a specific example of the present specification. Since the name of a specific device or the name of a specific signal/message/field described in the drawing is exemplarily presented, a technical feature of the present specification is not limited to a specific name used in the drawings below.

FIG. 7B illustrates an example of a satellite (a satellite as a non- terrestrial base station) handover. In FIG. 7B, an NTN typical scenario based on a regenerative payload is illustrated.

Referring to FIG. 7B, a satellite (or a UAS platform) may generate a service link with UE. The satellite (or the UAS platform) connected to the UE may be connected to another satellite (or a UAS platform) through Inter-satellite links (ISL). The other satellite (or the UAS platform) may be connected to a gateway through a feeder link. The satellite may be connected to a data network through the gateway with the other satellite based on the regenerative payload. In the case that the ISL is not present between the satellite and the other satellite, the feeder link between the satellite and the gateway is required.

For reference, the scenarios of FIGS. 7A and 7B above are merely an example of the NTN scenario, and the NTN may be implemented based on various types of scenarios.

The NTN may generally feature the following elements:
- One or several satellite gateways (sat-gateways) connecting NTN to public data network:
   i) A Geostationary Earth Orbit (GEO) satellite may be fed by one or several satellite gateways disposed across a satellite target coverage (e.g., regional or even continental coverage). It may be assumed that the UE in a cell is served only by one sat-gateway.
   ii) A Non-GEO satellite may be continuously served by one or several satellite gateways at a time. A system may ensure service and feeder link continuity between continuous service satellite gateways with a time duration sufficient to proceed with mobility anchoring and handover.
- Feeder link or radio link between sat-gateway and satellite (or UAS platform).
- Service link or radio link between UE and satellite (or UAS platform).
- Satellite (or UAS platform) capable of implementing transparent or regenerative (with on board processing) payload. The satellite (or the UAS platform) may generally generate several beams over a designated service area according to a field of view of the satellite (or the UAS platform). Footprints of the beam may generally be elliptical. The field of view of the satellite (or the UAS platform) may differ according to an onboard antenna diagram and the minimum elevation angle:
   i) Transparent payload: Radio frequency filtering, frequency conversion, and amplification may be included. Accordingly, a waveform signal repeated by the payload may not be changed;
   ii) Regenerative payload: Radio frequency filtering, frequency conversion and amplification, demodulation/decoding, switch and/or routing, coding/modulation may be included. The regenerative payload may be substantially the same as loading all or a portion of a base station function (e.g., gNB) to the satellite (or the UAS platform).
- In the case of constellation of satellites, inter-satellite links (ISL) may be selectively included. For this, the regenerative payload may be required for the satellite. The ISL may operate in an RF frequency or an optical band.
- The UE may be served by the satellite (or the UAS platform) within a targeted service area.

Table 3 below indicates a list of various types of satellites (or UAS platforms).

**[Table 3]**

| Platform | Altitude range | orbit | typical beam foot print size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 3000 km |
| Geostationary Earth Orbit (GEO) satellite | 35 786 km | notional station keeping position fixed in terms of elevation/azimuth with respect to a given earth point | 200 - 3500 km |
| UAS platform (including high altitude pseudo satellite (HAPS)) | 8 - 50 km (20 km for HAPS) | | 5 - 200 km |
| High Elliptical Orbit (HEO) satellite | 400 - 50000 km | Elliptical around the earth | 200 - 3500 km |

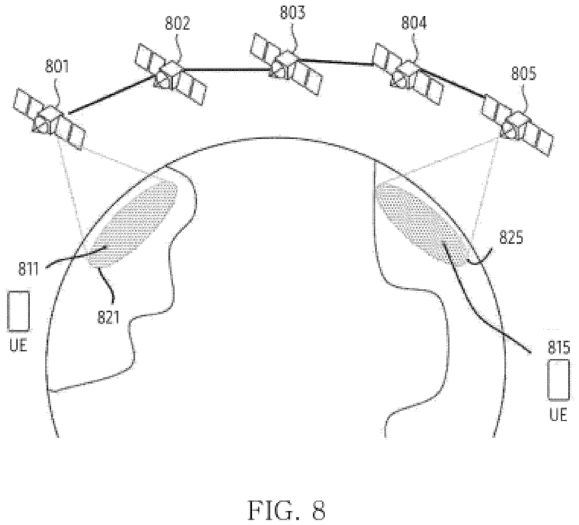

FIG. 8 illustrates an example of a signal path using an inter-satellite link (ISL). The embodiments of the present disclosure propose an apparatus and a method for providing a signaling connection between two terminals through satellites. In the present disclosure, a satellite may be a regenerative satellite or a transparent satellite. Each satellite exemplifies a satellite 260 or a satellite 620.

Referring to FIG. 8, first UE 811 may be currently connected to a first satellite 801. For example, the first satellite 801 may provide a first cell. The first UE 811 may be currently connected on the first cell. A user of the first UE 811 may want to communicate with a user of fifth UE 815. The fifth UE 815 may be currently connected to a fifth satellite 805. For example, the fifth satellite 805 may provide a second cell. The fifth UE 815 may be currently connected on the second cell. The first UE 811 may be located in a first footprint 821, which is a coverage area of the first satellite 801. The fifth UE 815 may be located in a fifth footprint 825, which is a coverage area of the fifth satellite 805. Since a location of the user of the first UE 811 is geographically far from a location of the user of the fifth UE 815, a signal path using the ISL may be used.

The first satellite 801 may be connected to a second satellite 802. The second satellite 802 may be connected to a third satellite 803. The third satellite 803 may be connected to a fourth satellite 804. The fourth satellite 804 may be connected to the fifth satellite 805. A signal path may be formed in an order of the first satellite 801, the second satellite 802, the third satellite 803, the fourth satellite 804, and the fifth satellite 805. A link (hereinafter, a satellite link or a satellite relay link) between the first satellite 801 and the fifth satellite 805 may be generated through a relay in the order of the first satellite 801, the second satellite 802, the third satellite 803, the fourth satellite 804, and the fifth satellite 805. UEs (the first UE 811, and the fifth UE 815), located in completely different locations (e.g., the first footprint 821, and the fifth footprint 825), may generate a satellite link through a procedure according to embodiments of the present disclosure.

When entering the first cell of the first satellite 801, the first UE 811 may register a location of the first UE 811 in a home location register (HLR) or an AMF (e.g., an AMF 640) of an NTN network. When entering the second cell of the fifth satellite 805, the fifth UE 815 may register a location of the fifth UE 815 in the HLR or the AMF (e.g., the AMF 640) of the NTN network. The location of the first UE 811 may be managed by the first satellite 801 or a core network entity connected to the first satellite 801, by a TAU procedure or an exchange procedure between upper node entities. The location of the fifth UE 815 may be managed by the fifth satellite 805 or a core network entity connected to the fifth satellite 805, by the TAU procedure or a procedure between upper node entities.

According to an embodiment, identification information (e.g., footprint ID #1) of the first footprint 821, identification information (e.g., satellite ID #1) of the first satellite 801, and beam identification information (e.g., Spotbeam ID #1) of the first satellite 801 may be used to specify an area where the first UE 811 is located. In order to specify an area where the fifth UE 815 is located, identification information (e.g., footprint ID #5) of the fifth footprint 825, identification information (e.g., satellite ID #5) of the fifth satellite 805, and beam identification information (e.g., Spotbeam ID #5) of the fifth satellite 805 may be used.

According to an embodiment, a plurality of satellites (e.g., the second satellite 802, the third satellite 803, and the fourth satellite 804) capable of forming the satellite link between the first satellite 801 and the fifth satellite 805 may be used. For example, first neighboring satellites adjacent to the first satellite 801 may be identified. The second satellite 802 may be identified among the first neighboring satellites. Second neighboring satellites adjacent to the second satellite 802 may be identified. The third satellite 803 may be identified among the second neighboring satellites. Third neighboring satellites adjacent to the third satellite 803 may be identified. The fourth satellite 804 may be identified among the third neighboring satellites. Fourth neighboring satellites adjacent to the fourth satellite 804 may be identified. The fifth satellite 805 may be identified among the fourth neighboring satellites. A plurality of satellites forming the satellite link between the first satellite 801 and the fifth satellite 805 may be determined by various subjects. For example, the plurality of satellites may be determined by a master satellite within a satellite group. The master satellite may perform a path setting between satellites. For example, the plurality of satellites may be determined by the AMF (e.g., the AMF 640). The AMF may identify the plurality of satellites forming the satellite link through a path selection algorithm among the plurality of satellites associated with the first satellite 801 and the fifth satellite 805. For example, each of the plurality of satellites may be determined by an individual satellite forming a path. The second satellite 802, the third satellite 803, the fourth satellite 804, and the fifth satellite 805 may be respectively identified by the first satellite 801, the second satellite 802, the third satellite 803, and the fourth satellite 804.

The first UE 811 may request a call connection with the fifth UE 815 on the first cell of the first satellite 801. The first UE 811 is a sender apparatus, and the fifth UE 815 may correspond to a receiver apparatus. The first UE 811 may transmit a request message for the call connection to the first satellite 801. In response to the request message, the first satellite 801 may determine whether a setting of a direct link from the first satellite 801 to the fifth satellite 805 is available. The first satellite 801 may be referred to as a source satellite. The fifth satellite 805 may be referred to as a target satellite. The direct link indicates a link in which the source satellite (e.g., the first satellite 801) and the target satellite (e.g., the fifth satellite 805) are directly connected without another satellite intervention (i.e., without a relay from the other satellite).

For example, the setting of the direct link from the first satellite 801 to the fifth satellite 805 may be available. A list of satellites adjacent to the first satellite 801 may be identified. The first satellite 801 may determine whether the fifth satellite 805 is included in the list. In the case that the fifth satellite 805 is included in the list, the first satellite 801 may determine that the setting of the direct link from the first satellite 801 to the fifth satellite 805 is possible. The first satellite 801 may transmit a link setting request message to the fifth satellite 805. The fifth satellite 805 may transmit a link setting response message to the first satellite 801. A link between the first satellite 801 and the fifth satellite 805 may be established.

For example, the setting of the direct link from the first satellite 801 to the fifth satellite 805 may be difficult. The list of the satellites adjacent to the first satellite 801 may be identified. The first satellite 801 may determine whether the fifth satellite 805 is included in the list. In the case that the fifth satellite 805 is not included in the list, the first satellite 801 may determine that the setting the direct link from the first satellite 801 to the fifth satellite 805 is impossible. The first satellite 801 may identify the second satellite 802 from among satellites included in the list. The first satellite 801 may transmit the link setting request message to the second satellite 802. The second satellite 802 may transmit the link setting response message to the first satellite 801. The link between the first satellite 801 and the second satellite 802 may be established. The first satellite 801 may transmit an indication message for a call connection between the first UE 811 and the fifth UE 815 to the second satellite 802 through the link. By repeating this procedure, a link between the second satellite 802 and the third satellite 803 may be established. The second satellite 802 may transmit the indication message for the call connection between the first UE 811 and the fifth UE 815 to the third satellite 803 through the link. By repeating this procedure, a link between the third satellite 803 and the fourth satellite 804 may be established. The third satellite 803 may transmit the indication message for the call connection between the first UE 811 and the fifth UE 815 to the fourth satellite 804 through the link. By repeating this procedure, a link between the fourth satellite 804 and the fifth satellite 805 may be established. The fourth satellite 804 may transmit the indication message for the call connection between the first UE 811 and the fifth UE 815 to the fifth satellite 805 through the link. The satellite link from the first satellite 801 to the fifth satellite 805 may be formed through the established links.

The fifth satellite 805 may transmit a signal to the fifth UE 815 in the fifth footprint 825 after a satellite link from the first satellite 801 is formed. The signal may be a paging signal, a wake-up signal, or an incoming request signal. The fifth UE 815 may perform a call setting procedure with the fifth satellite 805 in response to the signal. As the call setting procedure between the fifth UE 815 and the fifth satellite 805 is completed, the first UE 811 may communicate with the fifth UE 815.

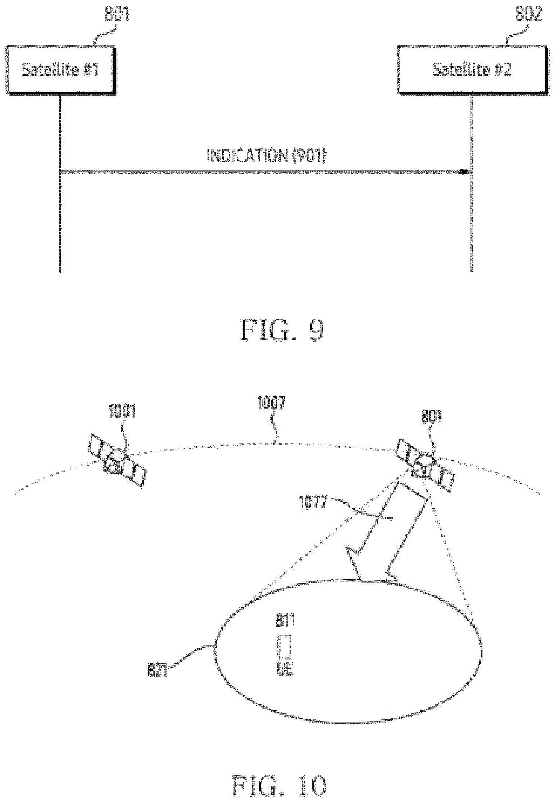

FIG. 9 illustrates an example of signaling using an ISL. In FIG. 9, a situation in which a setting of a direct link between first UE 811 and fifth UE 815 is difficult is described. A link between the first UE 811 and second UE 812 may be established, and then an indication message for a call connection may be transmitted through the link. As an example, in the case that all satellites are regenerative satellites, an interface between the satellites may be an XN interface. The indication message may be transferred on the XN interface.

Referring to FIG. 9, in operation 901, a first satellite 801 may transmit an indication message to a second satellite 802. For example, the indication message may be configured for the call connection between the first UE 811 and the fifth UE 815.

Although not illustrated in FIG. 9, the first satellite 801 may receive a request message for the call connection from the first UE 811. The request message may include identification information (e.g., a UE ID, a global unite temporary identifier (GUTI), and an International Mobile Subscriber Identity (IMSI)) of the first UE 811 corresponding to a sender, identification information (e.g., the UE ID, the GUTI, and the IMSI) of the fifth UE 815 corresponding to a receiver, identification information of a serving cell of the first UE 811, and/or identification information of the first satellite 801 providing the serving cell of the first UE 811.

In response to the request message, the first satellite 801 may identify a target satellite. The first satellite 801 may obtain information on an area where the fifth UE 815 is located through the identification information of the fifth UE 815. The first satellite 801 may identify a fifth satellite 805 providing a serving cell of the fifth UE 815 from the information on the area. The first satellite 801 may identify the fifth satellite 805 as the target satellite. According to an embodiment, the first satellite 801 may generate an indication message including information (DP: the identification information on the fifth satellite 805) on the target satellite. A subject identifying the target satellite may be performed by a separate network entity (e.g., an AMF or a HLR server) connected to the first satellite 801 instead of the first satellite 801, or a master satellite within a satellite group. According to an embodiment, the indication message may include the identification information of the first UE 811, the identification information of the fifth UE 815, identification information of the first satellite 801, which is a source satellite, identification information of the fifth satellite 805, which is the target satellite, information (e.g., a physical cell identity (PCI), and a cell global identity(CGI)) on a first cell provided by the first satellite 801, and/or information on a second cell provided by the fifth satellite 805.

After identifying the target satellite, the first satellite 801 may determine a path from the first satellite 801, which is the source satellite, to the fifth satellite 805, which is the target satellite. The path may include a plurality of satellites. According to an embodiment, the first satellite 801 may generate an indication message including information on satellites of the path. A subject determining the path may be performed by the separate network entity (e.g., the AMF or the HLR server) connected to the first satellite 801 instead of the first satellite 801, or the master satellite within the satellite group. If the path is set by an external network entity, the first satellite 801 may generate an indication message including information on the satellites of the set path. However, not only does a satellite continuously move along an orbit, but since each orbit is not parallel to each other, an optimal link within a three-dimensional space may be changed over time. Therefore, when a request message for a first call connection is received, a method may be considered to provide neighboring satellites with constellation information and/or ephemeris information for establishing a link instead of setting up an entire satellite path. For example, the ephemeris information may include position-velocity information and orbit information. The position-velocity information indicates a position vector and a velocity vector in an XYZ coordinate system, respectively, and the orbit information indicates a semi-major axis, eccentricity, a periapsis, longitude, and/or an inclination.

According to an embodiment, the first satellite 801 may generate an indication message including direction information. The first satellite 801 may obtain constellation information and/or ephemeris information of the fifth satellite 805. The first satellite 801 may determine the direction information, based on the ephemeris information of the first satellite 801 and the ephemeris information of the fifth satellite 805. For example, the first satellite 801 may determine a direction between a space in which the first satellite 801 is positioned and a space in which the fifth satellite 805 is positioned, at a specific time. According to the direction, satellites (e.g., the second satellite 802, the third satellite 803, and the fourth satellite 804) of a satellite path may be identified. For example, the direction may be obtained through a difference between a position vector of the first satellite 801, which is the source satellite, and a position vector of the fifth satellite 805, which is the target satellite, in the XYZ coordinate system. The direction may correspond to a direction vector represented in the XYZ coordinate system.

The first satellite 801 may transmit the generated indication message to the adjacent second satellite 802. For example, the second satellite 802 may be indicated by an external network entity (the AMF, the HLR server, or the master satellite within the satellite group). For another example, the second satellite 802 may be a satellite corresponding to a specific direction (e.g., a direction from the first satellite 801 to the fifth satellite 805) among neighboring satellites adjacent to the first satellite 801.

In FIG. 9, the indication message between the first satellite 801 and the second satellite 802 is illustrated, but embodiments of the present invention are not limited thereto. Transmission of the above-described indication message may be applied to any ISL. For example, a description of the indication message may also be applied to an indication message between the second satellite 802 and the third satellite 803. For example, the description of the indication message may also be applied to an indication message between the third satellite 803 and the fourth satellite 804. For example, the description of the indication message may also be applied to an indication message between the fourth satellite 804 and the fifth satellite 805. As a non-limited example, the first satellite 801 may determine a hop count. The satellite link from the first satellite 801 to the fifth satellite 805 may be understood as forming a relay link between the satellites. As the number of the satellites of the satellite link increases, it may be difficult to ensure a stable communication performance. Accordingly, the first satellite 801 may generate an indication message including the hop count of the satellite link. Whenever the indication message passes through each link of the satellite path, the hop count may decrease. For example, in the case that the hop count in the indication message of the first satellite 801 is 5, the hop count in the indication message transmitted to the second satellite 802 and the third satellite 803 may be 4.

According to an embodiment, the indication message may include at least one of items listed in a table below. The indication message may be transmitted from a specific satellite to another satellite via a link (e.g., ISL) between satellites.

**[Table 4]**

| Information | Descprition |
|---|---|
| Source Satellite ID | e.g.,: First satellite 801 |
| Destination Satellite ID | e.g.,: Fifth satellite 805 |
| Outgoing User | e.g.,: First UE 811 |
| Incoming User | e.g.,: Fifth UE 815 |
| Serving Cell for outgoing user | Identification information on First cell (e.g.,: PCI, CGI) |
| Serving Cell for incoming user | Identification information on Second cell (e.g.,: PCI, CGI) |
| Footprint for source satellite | e.g.,: First footprint 821 |
| Footprint for destination satellite | e.g.,: Fifth footprint 825 |
| Spotbeam for source satellite | e.g.,: Serving beam of First satellite 801 |
| Spotbeam for destination satellite | e.g.,: Serving beam of Fifth satellite 805 |
| Satellite Link (satellite list) | Information on list of satellites (e.g.,: First satellite 801, Second satellite 802, Third satellite 803, Fourth satellite 801, Fifth satellite 805) |
| Direction Information | Direction vector from source satellite to target satellite |

FIG. 10 illustrates an example of a satellite change according to orbital movement.

Referring to FIG. 10, a first satellite 801 may move along a designated orbit 1007. For example, the first satellite 801 may move along the designated orbit 1007 in a clockwise direction. Currently, the first satellite 801 provides service to a first footprint 821 through a first beam 1077. However, after a certain period of time elapses, it may be difficult for the first satellite 801 to no longer provide the service to the first footprint 821. Another satellite (e.g., a sixth satellite 1001) may provide service to the first footprint 821. Therefore, the first satellite 801 may provide not only information on the first satellite 801, but also information on a satellite (hereinafter referred to as a successor satellite) (e.g., the sixth satellite 1001) succeeding the first satellite 801, to the second satellite 802. According to an embodiment, an indication message may include information on the successor satellite associated with the first satellite 801.

Although not illustrated in FIG. 10, like a source satellite, a target satellite may also move along the designated orbit. Therefore, after a certain period of time elapses, a fifth satellite 805 may no longer provide service to a fifth footprint 825. After the certain period of time elapses, another satellite succeeding the fifth satellite 805 may provide service to the fifth footprint 825.

Each satellite may know ephemeris information of other satellites. Therefore, the satellite may know where another satellite is in service at a specific time zone. For example, the first satellite 801 may identify satellites succeeding each of the second satellite 802, a third satellite 803, a fourth satellite 804, and the fifth satellite 805 that form a satellite link. The first satellite 801 may identify at least one of first satellites succeeding the first satellite 801. The indication message may include information on the at least one of first satellites, beam ID information of each satellite of the at least one of first satellites, a time during which each satellite of the at least one of first satellites stays in a corresponding footprint, and cell information (e.g., in the case of a transparent payload, a cell is maintained by switch-over, but in the case of a regenerative payload, the cell is changed) of each satellite of the at least one of first satellites. The first satellite 801 may identify at least one of second satellites succeeding the second satellite 802. The indication message may include information on the at least one of second satellites, beam ID information of each satellite of the at least one of second satellites, a time during which each satellite of the at least one of second satellite stays in a corresponding footprint, and cell information (e.g., in the case of the transparent payload, the cell is maintained by the switch-over, but in the case of the regenerative payload, the cell is changed) of each satellite of the at least one of second satellites. The first satellite 801 may identify at least one of third satellites succeeding the third satellite 803. The indication message may include information on the at least one of third satellites, beam ID information of each satellite of the at least one of third satellites, a time during which each satellite of the at least one of third satellites stays in a corresponding footprint, and cell information (e.g., in the case of the transparent payload, the cell is maintained by the switch-over, but in the case of the regenerative payload, the cell is changed) of each satellite of the at least one of third satellites. The first satellite 801 may identify at least one of fourth satellites succeeding the fourth satellite 804. The indication message may include information on the at least one of fourth satellites, beam ID information of each satellite of the at least one of fourth satellites, a time during which each satellite of the at least one of fourth satellites stays in a corresponding footprint, and cell information (e.g., in the case of the transparent payload, the cell is maintained by the switch-over, but in the case of the regenerative payload, the cell is changed) of each satellite of the at least one of fourth satellites. The first satellite 801 may identify at least one of fifth satellites succeeding the fifth satellite 805. The indication message may include information on the at least one of fifth satellites, beam ID information of each satellite of the at least one of fifth satellites, a time during which each satellite of the at least one of fifth satellites stays in a corresponding footprint, and cell information (e.g., in the case of the transparent payload, the cell is maintained by the switch-over, but in the case of the regenerative payload, the cell is changed) of each satellite of the at least one of fifth satellites. A subject identifying a subsequent succeeding may be performed by a separate network entity (e.g., an AMF or a HLR server) connected to the first satellite 801 instead of the first satellite 801 or a master satellite within a satellite group.

In FIG. 10, it has been described that information on a succeeding satellite should be included in an indication message transmitted between satellites according to an orbital movement of a satellite. Various information may be included in the indication message according to a type of the satellite or a capability of a terminal as well as the orbital movement of the satellite. According to an embodiment, the indication message may include information on an orbit type of a satellite included in a path. For example, the indication message may include information on an orbit type of the source satellite (e.g., the first satellite 801). The orbit type may indicate a LEO, a MEO, or a GEO. For example, the indication message may include information on an orbit type of the target satellite (e.g., the fifth satellite 805). The orbit type may indicate the LEO, the MEO, or the GEO. According to an embodiment, the indication message may include information on a satellite type. The satellite type may indicate whether it is a regenerative payload or a transparent payload. According to an embodiment, the indication message may include information on velocity of a satellite. For example, the velocity of the satellite may be indicated through a velocity vector of each axis in an XYZ coordinate system, as indicated by ephemeris information. According to an embodiment, the indication message may include information on the number of beams per satellite. Even with the same satellite, various coverage may be supported through beams different to each other. The indication message may include information on the number of beams provided by the satellite and/or information (e.g., beam ID) on each beam.

According to an embodiment, the indication message may include at least one of items listed in a table below. The items may be defined per each satellite. The indication message may be transmitted from a specific satellite to another satellite via a link (e.g., ISL) between satellites.

**[Table 5]**

| Information | Description |
|---|---|
| Satellite ID | |
| Successor Satellite ID | |
| Beam ID Information of Successor Satellite | |
| Duration Information | Information on time during which successor satellite stays in footprint of corresponding satellite |
| Cell Information | In case of regenerative payload, cell information (handover) of successor satellite |
| Orbit Type | LEO, GEO, MEO |
| Satellite Type | Transparent payload or regenerative payload |
| Velocity | Velocity of satellite |
| Number of Beam | Number of beam supportable per satellite |
| Bam ID | Beam Identifier per satellite |

As a non-limited example, at least one of the items in the Table 5 may be used by being included in the indication message together with at least one of the items in Table 4.

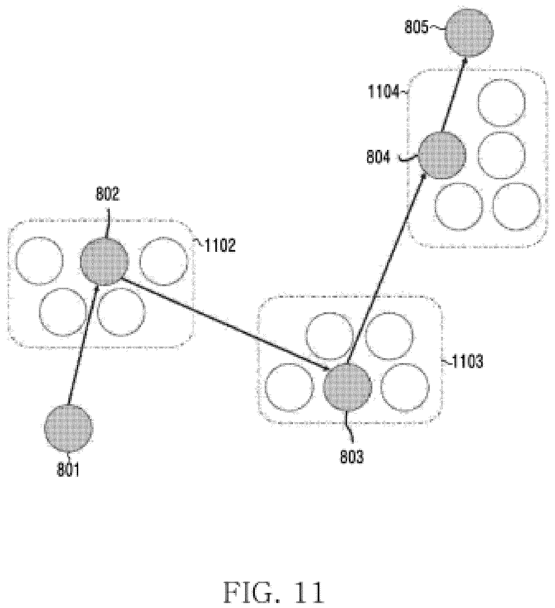

FIG. 11 illustrates an example of a path setting using an ISL. Hereinafter, the path setting is described as being performed by a source satellite (e.g., a first satellite 801), but the embodiments of the present disclosure are not limited thereto. The path setting may be performed by a separate network entity (e.g., an NTN gateway 223, an NTN gateway 630, an AMF 640, a HLR server) that manages satellites, or may be performed by a master satellite that manages other satellites among the satellites.

Referring to FIG. 11, the first satellite 801 may identify a first set 1102 of adjacent satellites neighboring the first satellite 801. The first satellite 801 may identify a second satellite 802 among satellites of the first set 1102. For example, the first satellite 801 may identify the second satellite 802 among the satellites of the first set 1102, based on a time during which a satellite stays in a footprint, direction information between the source satellite and a target satellite, beam information per satellite, and ephemeris information (e.g., position-velocity information and orbit information) per satellite. The second satellite 802 may identify a second set 1103 of adjacent satellites neighboring the second satellite 802. The second satellite 802 may identify a third satellite 803 among satellites of the second set 1103. For example, the second satellite 802 may identify the third satellite 803 among the satellites of the second set 1103, based on a time during which a satellite stays in a footprint, direction information between the source satellite and the target satellite, beam information per satellite, and ephemeris information (e.g., position-velocity information and orbit information) per satellite. The third satellite 803 may identify a third set 1104 of adjacent satellites neighboring the third satellite 803. The third satellite 803 may identify a fourth satellite 804 among satellites of the third set 1104. For example, the third satellite 803 may identify the fourth satellite 804 among the satellites of the third set 1104, based on a time during which a satellite stays in a footprint, direction information between the source satellite and the target satellite, beam information per satellite, and ephemeris information (e.g., position-velocity information and orbit information) per satellite. The fourth satellite 804 may identify a fourth set (not illustrated) of adjacent satellites neighboring the fourth satellite 804. The fourth satellite 804 may identify a fifth satellite 805 among satellites of the fourth set. For example, the fourth satellite 804 may identify the fifth satellite 805 among the satellites of the fourth set, based on a time during which a satellite stays in a footprint, direction information between the source satellite and the target satellite, beam information per satellite, and ephemeris information (e.g., position-velocity information and orbit information) per satellite.

In FIG. 11, an example in which satellites between the first satellite 801 and the fifth satellite 805 set a satellite path according to a constant algorithm has been described. As a non-limited example, the path setting may be set by an external network entity (e.g., an NTN gateway 223, an NTN gateway 630, an AMF 640, a HLR server, or a master satellite within a satellite group). The first satellite 801 may transmit a message for requesting a path setting to the external network entity. For example, since the AMF 640 knows ephemeris information for each satellite, position information of a corresponding satellite may be identified at a specific time zone. The AMF 640 may determine a list of satellites connecting the first satellite 801 and the fifth satellite 805. The AMF 640 may transmit information on the list to each satellite. For example, the AMF 640 may transmit information on the second satellite 802 to the first satellite 801. The AMF 640 may transmit information on the third satellite 803 to the second satellite 802. The AMF 640 may transmit information on the fourth satellite 804 to the third satellite 803. The AMF 640 may transmit information on the fifth satellite 805 to the fourth satellite 804. For another example, the AMF 640 may transmit information on a list of satellites of a path to each of the first satellite 801, the second satellite 802, the third satellite 803, the fourth satellite 804, and the fifth satellite 805.

As a non-limited example, the satellite path may be set up in an ad-hoc network method. In the ad-hoc network method, a network topology may be dynamically formed through autonomous signaling between satellites. For example, the first satellite 801 may broadcast an indication message. A satellite (e.g., the second satellite 802) that has received the indication message may broadcast the indication message. By repeatedly transmitting the indication message through a link between the satellite and the satellite, the indication message may reach the fifth satellite 805, which is the target satellite. For the ad-hoc network method, the indication message may further include information on the hop count.

According to an embodiment, a satellite selection criterion for a path setting may include the following elements. A distance and communication available range between satellites, a current traffic load of each satellite, an orbital movement path prediction of a satellite, and a communication delay time may be considered. An optimal path may be selected based on these criteria.

If an ISL setting on the selected path fails, the following replacement procedure may be performed. First, an adjacent satellite having the next priority may be selected. Subsequently, an alternative route re-search may be performed. If necessary, a detour route through a ground gateway may be set.

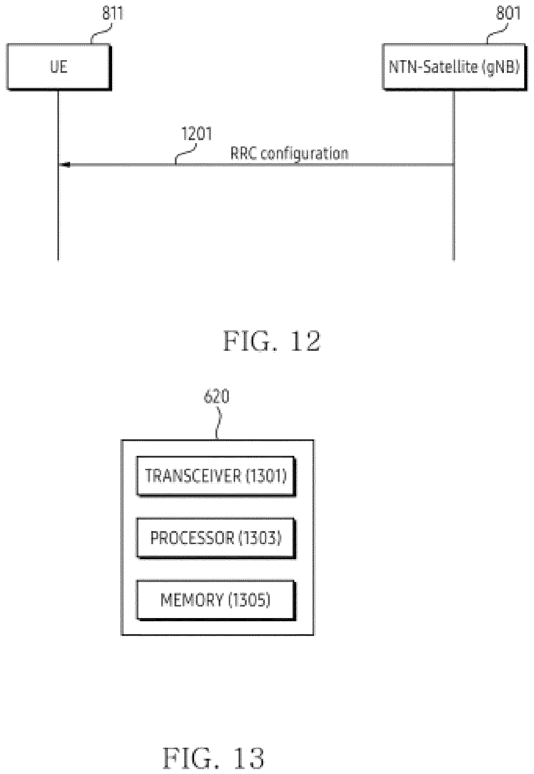

FIG. 12 illustrates an example of an RRC configuration for path indication.

Referring to FIG. 12, a first satellite 801 may transmit RRC configuration 1201 information to first UE 811. According to an embodiment, the RRC configuration 1201 information may include information on the first satellite 801 and successor satellites for the first satellite 801. For example, the RRC configuration 1201 information may include ephemeris information on each satellite. According to an embodiment, the RRC configuration 1201 information may be provided through an SI message of a system information block (SIB). For example, the RRC configuration 1201 information may have the following format.

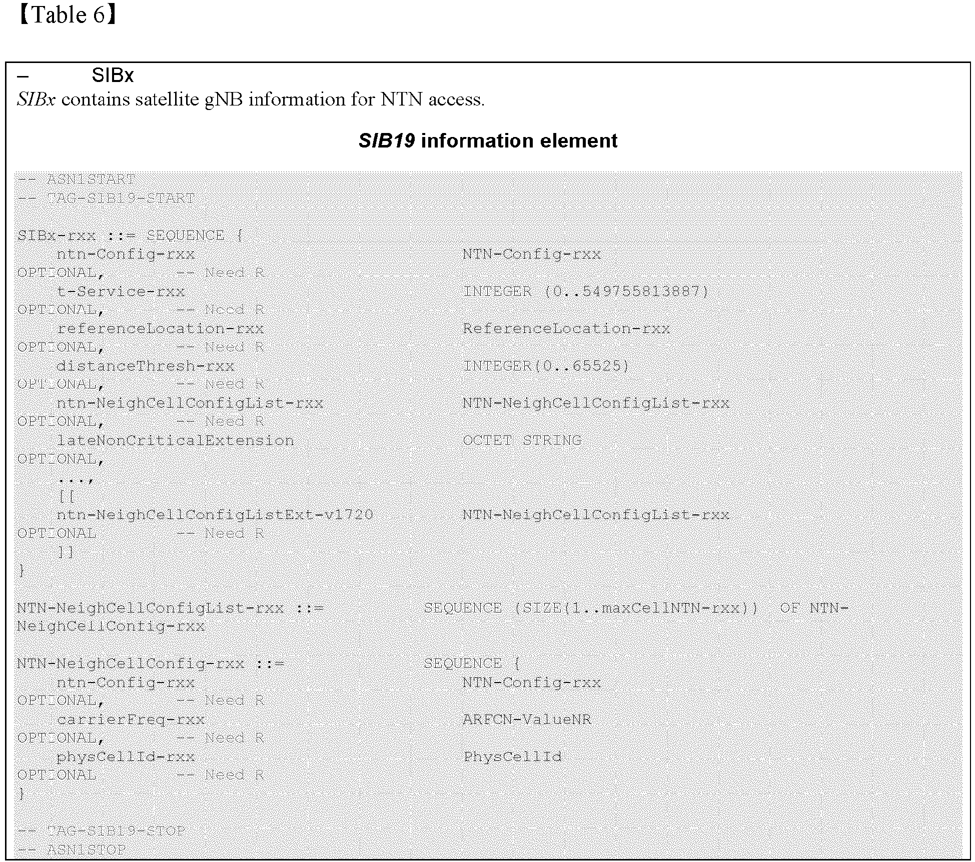

The 'ntn-Config' indicates parameters for accessing a wireless network through NTN access, and the following table (e.g., Table 7) may be referenced. The 't-service' may indicate time information on a moment at which a cell provided through an NTN quasi-Earth fixed system will cease service for an area currently in charge. The 'referenceLocation' indicates a reference position of a serving cell provided through the NTN Quasi-Earth fixed system. The 'distanceThresh' indicates the distance from the reference position of the serving cell, and may be used for position-based measurement in a RRC IDLE or RRC INACITVE state. The 'ntn-NeighborCellConfigList' may indicate information on a neighboring cell for a cell provided through a satellite (e.g., the satellite 260, and the satellite 620).

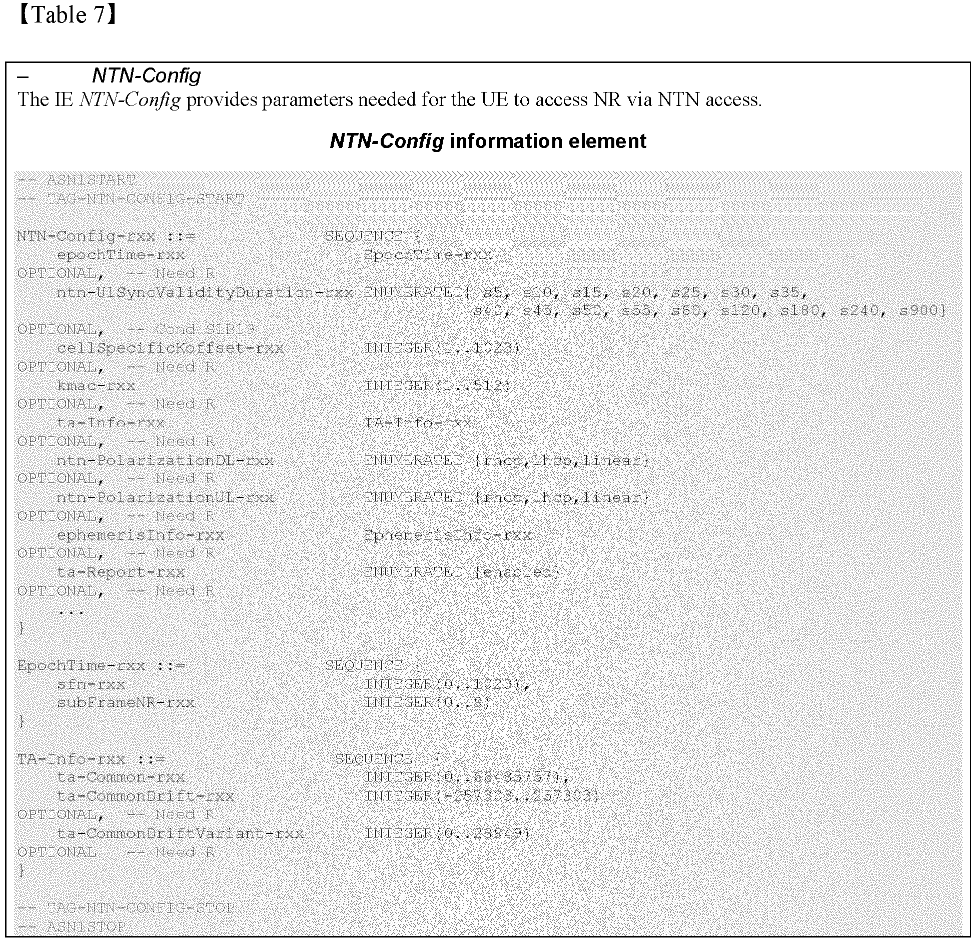

The 'epochTime' indicates an epoch time of NTN support information. In case of being provided specifically through the SIB or provided through dedicated signaling, the epoch time indicates a start time of a DL subframe, and display a number of a subframe signaled together with a system frame number (SFN) and support information. As a non-limited example, for higher granularity, the 'epochTime' may further include an information element (IE) indicating a symbol in addition to the subframe. The IE may indicate one of 0 to 13 and may indicate one of 14 symbols.

The 'ntn-UlSyncValidityDuration' is validity duration for auxiliary information (e.g., ephemeris information, and common TA parameters) set by a network. In other words, the duration indicates a maximum time capable of applying the support information, without obtaining new NTN support information. The time duration may start from the epoch time. The "cellSpecificKoffset" indicates a scheduling offset used for timing relationships modified for an NTN. The 'kmac' indicates a scheduling offset used in the case that downlink timing and uplink timing do not match. The 'ta-Info' may include information for a timing advance (TA). The information for the TA may include the 'ta-common', which is a common TA controlled by a network, the 'ta-commonDrift' which indicates a drift rate of the common TA, and the 'ta-commonDriftVariant' which indicates a variation of the drift rate. The 'ntn-polarization DL' and the 'ntn-polarization UL' respectively indicate polarization information in a DL and an UL. The 'ephemmerisInfo' indicates ephemeris information, and the following table (e.g., Table 8) may be exemplified. The 'ta-Report' indicates that TA reporting is activated during RRC connection establishment, RRC connection resume, and a RRC connection re-establishment.

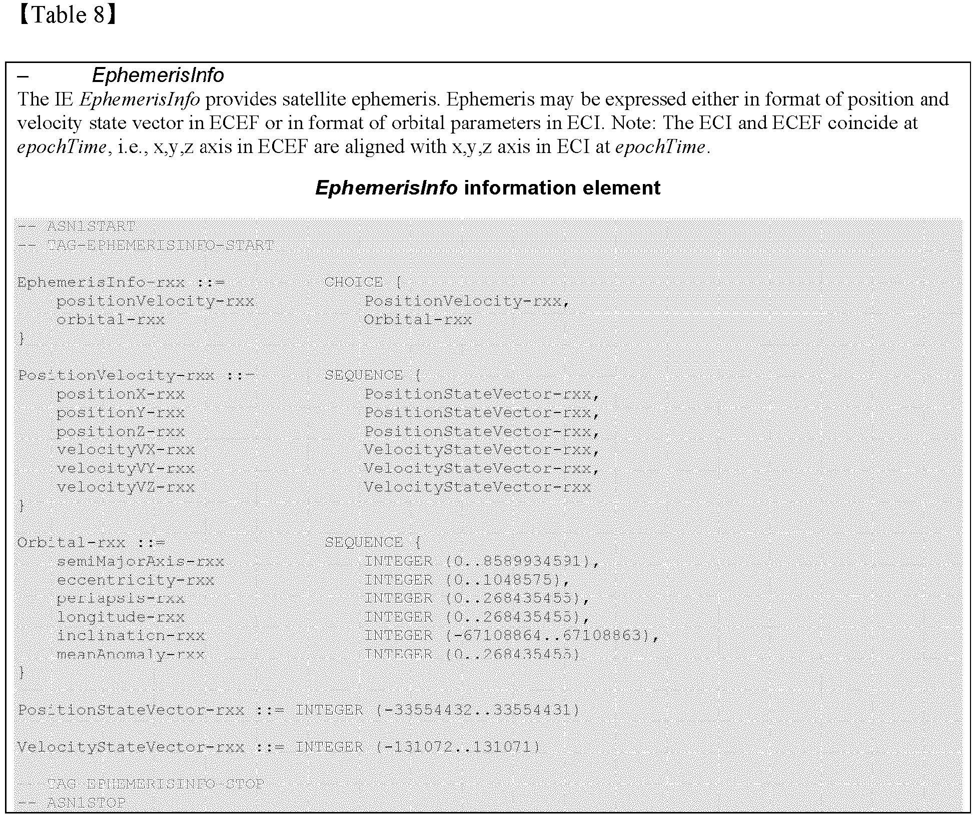

The "positionX", the "positionY", and the "positionZ" respectively indicate a position state vector of earth-centered and earth-fixed (ECEF) in an xyz coordinate system. A unit indicates a meter, and one step indicates 1.3 meters (m). For example, an actual value may be a field value* 1.3. The 'velocityX', the 'velocity Y', and the 'velocityZ' respectively indicate a velocity state vector of the ECEF in the xyz coordinate system. One step indicates 0.06 meters/seconds (m/s). For example, the actual value may be the field value*0.06. The ' semiMajorAxis indicates a semi-major axis, the 'ecentricity' indicates eccentricity, the 'periapsis' indicates a periapsis, the 'longitude' indicates longitude, the 'inclination' indicates inclination and 'meanAnomaly' indicates a ratio of an elliptical orbital period elapsed after an object orbiting with mean anomaly passes through the periapsis.

According to an embodiment, the RRC configuration information may include information on a list of satellites (i.e., satellites of a satellite link) on a path set from a source satellite (e.g., the first satellite 801) to a target satellite (e.g., the fifth satellite 805). For example, the RRC configuration information may include a list including the first satellite 801, a second satellite 802, a third satellite 803, a fourth satellite 804, and the fifth satellite 805. The RRC configuration information may be provided to first UE 811 in response to a call connection request message of the first UE 811.

According to an embodiment, the RRC configuration information may include information on duration of a call connection with the fifth UE 815 established through a satellite link between the first satellite 801 and the fifth satellite 805. A satellite not only continuously moves along an orbit, but since each orbit is not parallel to each other, an optimal link in a three-dimensional space may vary as time passes. Therefore, duration for a corresponding path may be limited. The RRC configuration information may include information on a valid time of a corresponding satellite link.

FIG. 13 illustrates an example of components of a satellite (e.g., the satellite 260 or the satellite 620). The terms '... unit', '... device', and the like, used hereinafter mean a unit that processes at least one function or operation, which may be implemented as hardware or software or a combination of hardware and software.

Referring to FIG. 13, the satellite 620 may include a transceiver 1301, a processor 1303, and memory 1305. The transceiver 1301 performs functions for transmitting and receiving a signal through a wireless channel. For example, the transceiver 1301 up-converts a baseband signal into an RF band signal and then transmits it through an antenna, and down-converts the RF band signal received through the antenna into the baseband signal. For example, the transceiver 1301 may include a transmission filter, a reception filter, an amplifier, a mixer, an oscillator, a DAC, an ADC, and the like.

The transceiver 1301 may include a plurality of transmission/reception paths. Furthermore, the transceiver 1301 may include an antenna unit. The transceiver 1301 may include at least one antenna array configured with a plurality of antenna elements. In terms of hardware, the transceiver 1301 may be configured with a digital circuit and an analog circuit (e.g., a radio frequency integrated circuit (RFIC)). Herein, the digital circuit and the analog circuit may be implemented as one package. In addition, the transceiver 1301 may include a plurality of RF chains. The transceiver 1301 may perform beamforming. The transceiver 1301 may apply a beamforming weight to a signal, in order to assign directivity to the signal to be transmitted and received according to a setting of the processor 1303. According to an embodiment, the transceiver 1301 may include a radio frequency (RF) block (or a RF unit).

The transceiver 1301 may transmit and receive a signal on a radio access network. For example, the transceiver 1301 may transmit a downlink signal. The downlink signal may include a synchronization signal (SS), a reference signal (RS) (e.g., a cell-specific reference signal (CRS) and a demodulation (DM)-RS), system information (e.g., a MIB, a SIB, and remaining system information (RMSI), other system information (OSI)), a configuration message, control information, or downlink data. In addition, for example, the transceiver 1301 may receive an uplink signal. The uplink signal may include random access related signal (e.g., random access preamble (RAP) (or a message 1 (Msg 1), or a message 3 (Msg 3)), a reference signal (e.g., a sounding reference signal (SRS), or a DM-RS), or a power headroom report (PHR). Only the transceiver 1301 is illustrated in FIG. 13, but according to another implementation example, the satellite 620 may include two or more RF transceivers.

The processor 1303 controls overall operations of the satellite 620. The processor 1303 may be referred to as a control unit. For example, the processor 1303 transmits and receives a signal through the transceiver 1301. Furthermore, the processor 1303 writes and reads data to the memory 1305. Additionally, the processor 1303 may perform functions of a protocol stack required by a communication standard. Only the processor 1303 is illustrated in FIG. 13, but according to another implementation example, the satellite 620 may include two or more processors. The processor 1303, which is an instruction set or a code stored in the memory 1305, may be a storage space that stores an instructions/code or an instructions/code that are temporarily resided in the processor 1303, or may be a portion of circuitry constituting the processor 1303. In addition, the processor 1303 may include various modules for performing communication. The processor 1303 may control the satellite 620 to perform operations according to embodiments.

The memory 1305 stores data such as a basic program, an application program, setting information, and the like, for an operation of the satellite 620. The memory 1305 may be referred to as a storage unit. The memory 1305 may be configured with volatile memory, non-volatile memory, or a combination of the volatile memory and the non-volatile memory. Additionally, the memory 1305 provides the stored data according to a request of the processor 1303. According to an embodiment, the memory 1305 may include memory for a condition, a command, or a setting value related to an SRS transmission method.

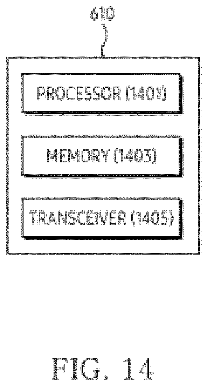

FIG. 14 illustrates an example of components of a terminal (e.g., UE 610). The terminal exemplifies the UE 610. The UE 610 may perform access to a gNB (e.g., the gNB 120) that provides NR access through an NTN.

Referring to FIG. 14, the UE 610 may include at least one processor 1401, at least one memory 1403, and at least one transceiver 1405. Hereinafter, a component is described in the singular, but implementation of a plurality of components or sub-components is not excluded.

The processor 1401 controls overall operations of the UE 610. For example, the processor 1401 writes and reads data to the memory 1403. For example, the processor 1401 transmits and receives a signal through the transceiver 1405. One processor is illustrated in FIG. 14, but the embodiments of the present disclosure are not limited thereto. The UE 610 may include at least one processor to perform embodiments of the present disclosure. The processor 1401 may be referred to as a control unit or a control means. According to embodiments, the processor 1401 may control the UE 610 to perform at least one of operations or methods according to the embodiments of the present disclosure.

The memory 1403 may store data such as a basic program, an application program, and setting information for an operation of the UE 610. The memory 1403 may store various data used by at least one component (e.g., the transceiver 1405 or the processor 1401). The data may include, for example, input data or output data for software and commands related thereto. The memory 1403 may be configured with volatile memory, non-volatile memory, or a combination of the volatile memory and the non-volatile memory. Additionally, the memory 1403 may provide the stored data according to a request of the processor 1401.

The transceiver 1405 performs functions for transmitting and receiving a signal through a wireless channel. For example, the transceiver 1405 performs a conversion function between a baseband signal and a bit stream according to a physical layer specification of a system. For example, when transmitting data, the transceiver 1405 generates complex symbols by encoding and modulating a transmission bit stream. In addition, when receiving data, the transceiver 1405 restores a reception bit stream by demodulating and decoding the baseband signal. In addition, the transceiver 1405 up-converts the baseband signal into a radio frequency (RF) band signal, and then transmits it through an antenna, and down-converts the RF band signal received through the antenna into the baseband signal.

To this end, the transceiver 1405 may include a transmission filter, a reception filter, an amplifier, a mixer, an oscillator, a digital to analog converter (DAC), an analog to digital converter (ADC), and the like. In addition, the transceiver 1405 may include a plurality of transmission/ reception paths. Furthermore, the transceiver 1405 may include at least one antenna array configured with a plurality of antenna elements. In terms of hardware, the transceiver 1405 may be configured with a digital unit and an analog unit, and the analog unit may be configured with a plurality of sub-units according to operating power, operating frequency, and the like.

The transceiver 1405 transmits and receives a signal as described above. Accordingly, the transceiver 1405 may be referred to as a 'transmission unit', a 'reception unit', or a 'transmission/reception unit'. In addition, in the following description, transmission and reception performed through a wireless channel, a backhaul network, an optical cable, Ethernet, or another wired path are used in a meaning of including processing as described above being performed by the transceiver 1405. According to an embodiment, the transceiver 1405 may provide an interface for performing communication with other nodes in a network. That is, the transceiver 1405 may convert a bit stream transmitted from the UE 610 to another node, for example, another access node, another base station, an upper node, a core network, and the like into a physical signal, and may convert a physical signal received from another node into a bit stream.

In describing embodiments of the present disclosure, terms and messages defined in 3GPP are used to describe a message between a satellite (e.g., the satellite 620) and a terminal (e.g., the UE 610), but the embodiments of the present disclosure are not limited thereto. Terms and messages having a technical meaning equivalent to the above-described terms and messages may be used instead. Furthermore, a gNB, a gNB-CU, and a gNB-DU, as well as a gNB-CU-control plane (CP) (e.g., the C-plane in FIG. 3A) and a gNB-CU-user plane (UP) (e.g., the U-plane in FIG. 3B) may be used as a satellite. In addition, not only a satellite may be used as a base station (e.g., a gNB) or a portion of a base station (e.g., a DU), but also a core network entity (e.g., an AMF 235) connected to a base station may be implemented as the satellite. For example, communication between the satellite 620 and the satellite operating as the AMF 235 may be defined. For example, logical nodes including the AMF 235 and the gNB 120 may be implemented in one satellite. As implemented in a software manner through network virtualization, separated logical nodes may be disposed in a satellite, which is one piece of hardware.

In embodiments, an apparatus of a satellite for providing a non-terrestrial network (NTN) access is provided. The apparatus may comprise memory storing instructions, at least one processor, and at least one transceiver. The instructions, when executed by the at least one processor, may cause the apparatus to receive, from a terminal through the at least one transceiver, a request message for a call connection, identify a target satellite corresponding to a target terminal of the request message, determine whether a direct link to the target terminal is available or not, in a case that the direct link to the terminal is available, transmit, to the target satellite through the at least one transceiver, an indication message for a call connection between the terminal and the target terminal, in a case that the direct link to the terminal is not available, identify a second satellite capable of forming a direct link with the satellite, and transmit, to the second satellite through the at least one transceiver, the indication message.

For example, the indication message may include at least one of identification information of the satellite, identification information of the target satellite, identification information of the terminal, identification information of the target terminal, beam information of the satellite, or beam information of the target satellite.

For example, the indication message may include direction information indicating a direction vector from the satellite to the target satellite.

For example, the indication message may include a list of satellites on a path from the satellite to the target satellite.

For example, the indication message may include information on a first successor satellite that will provide service to a first footprint of the satellite, and information on a second successor satellite that will provide service to a second footprint of the target satellite.

For example, the information on the first successor satellite may include at least one of identification information of the first successor satellite, beam information of the first successor satellite, cell information of the first successor satellite, or information on a time during which the first successor satellite stays in the first footprint of the satellite. The information on the second successor satellite may include at least one of identification information of the second successor satellite, beam information of the second successor satellite, cell information of the second successor satellite, or information on a time during which the second successor satellite stays in the second footprint of the target satellite.

For example, the request message may include identification information of the terminal and identification information of the target terminal.

In embodiments, a method performed by a satellite for providing a non-terrestrial network (NTN) access is provided. The method may comprise receiving, from a terminal, a request message for a call connection, identifying a target satellite corresponding to a target terminal of the request message, determining whether a direct link to the target terminal is available or not, in a case that the direct link to the terminal is available, transmitting, to the target satellite, an indication message for a call connection between the terminal and the target terminal, in a case that the direct link to the terminal is not available, identifying a second satellite capable of forming a direct link with the satellite, and transmitting, to the second satellite, the indication message.

For example, the indication message may include at least one of identification information of the satellite, identification information of the target satellite, identification information of the terminal, identification information of the target terminal, beam information of the satellite, or beam information of the target satellite.

For example, the indication message may include direction information indicating a direction vector from the satellite to the target satellite.

For example, the indication message may include a list of satellites on a path from the satellite to the target satellite.

For example, the indication message may include information on a first successor satellite that will provide service to a first footprint of the satellite, and information on a second successor satellite that will provide service to a second footprint of the target satellite.

For example, the information on the first successor satellite may include at least one of identification information of the first successor satellite, beam information of the first successor satellite, cell information of the first successor satellite, or information on a time during which the first successor satellite stays in the first footprint of the satellite. The information on the second successor satellite may include at least one of identification information of the second successor satellite, beam information of the second successor satellite, cell information of the second successor satellite, or information on a time during which the second successor satellite stays in the second footprint of the target satellite.

For example, the request message may include identification information of the terminal and identification information of the target terminal.

In embodiments, a non-transitory storage medium is provided. Memory storing instructions may be included. The instructions, when executed by a processor of the satellite, may cause the satellite to receive, from a terminal, a request message for a call connection, identify a target satellite corresponding to a target terminal of the request message, determine whether a direct link to the target terminal is available or not, in a case that the direct link to the terminal is available, transmit, to the target satellite, an indication message for a call connection between the terminal and the target terminal, in a case that the direct link to the terminal is not available, identify a second satellite capable of forming a direct link with the satellite, and transmit, to the second satellite, the indication message.

For example, the indication message may include at least one of identification information of the satellite, identification information of the target satellite, identification information of the terminal, identification information of the target terminal, beam information of the satellite, or beam information of the target satellite.

For example, the indication message may include direction information indicating a direction vector from the satellite to the target satellite.

For example, the indication message may include a list of satellites on a path from the satellite to the target satellite.

For example, the indication message may include information on a first successor satellite that will provide service to a first footprint of the satellite, and information on a second successor satellite that will provide service to a second footprint of the target satellite.

For example, the information on the first successor satellite may include at least one of identification information of the first successor satellite, beam information of the first successor satellite, cell information of the first successor satellite, or information on a time during which the first successor satellite stays in the first footprint of the satellite. The information on the second successor satellite may include at least one of identification information of the second successor satellite, beam information of the second successor satellite, cell information of the second successor satellite, or information on a time during which the second successor satellite stays in the second footprint of the target satellite.

For example, the request message may include identification information of the terminal and identification information of the target terminal.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in random access memory, non-volatile memory including flash memory, read only memory (ROM), electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, each of configuration memories may be included in plural.

Additionally, a program may be stored in an attachable storage device capable of being accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural components, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. An apparatus of a satellite for providing a non-terrestrial network (NTN) access, comprising:
memory storing instructions;
at least one processor; and
at least one transceiver, and
wherein the instructions, when executed by the at least one processor, cause the apparatus to:
receive, from a terminal through the at least one transceiver, a request message for a call connection;
identify a target satellite corresponding to a target terminal of the request message;
determine whether a direct link to the target terminal is available or not;
in a case that the direct link to the terminal is available, transmit, to the target satellite through the at least one transceiver, an indication message for a call connection between the terminal and the target terminal;
in a case that the direct link to the terminal is not available:
identify a second satellite capable of forming a direct link with the satellite, and
transmit, to the second satellite through the at least one transceiver, the indication message.

2. The apparatus of claim 1,
wherein the indication message includes at least one of identification information of the satellite, identification information of the target satellite, identification information of the terminal, identification information of the target terminal, beam information of the satellite, or beam information of the target satellite.

3. The apparatus of claim 1,
wherein the indication message includes direction information indicating a direction vector from the satellite to the target satellite.

4. The apparatus of claim 1,
wherein the indication message includes a list of satellites on a path from the satellite to the target satellite.

5. The apparatus of claim 1,
wherein the indication message includes information on a first successor satellite that will provide service to a first footprint of the satellite, and information on a second successor satellite that will provide service to a second footprint of the target satellite.

6. The apparatus of claim 5,
wherein the information on the first successor satellite includes at least one of identification information of the first successor satellite, beam information of the first successor satellite, cell information of the first successor satellite, or information on a time during which the first successor satellite stays in the first footprint of the satellite, and
wherein the information on the second successor satellite includes at least one of identification information of the second successor satellite, beam information of the second successor satellite, cell information of the second successor satellite, or information on a time during which the second successor satellite stays in the second footprint of the target satellite.

7. The apparatus of claim 1,
wherein the request message includes identification information of the terminal and identification information of the target terminal.

8. A method performed by a satellite for providing a non-terrestrial network (NTN) access, comprising:
receiving, from a terminal, a request message for a call connection;
identifying a target satellite corresponding to a target terminal of the request message;
determining whether a direct link to the target terminal is available or not;
in a case that the direct link to the terminal is available, transmitting, to the target satellite, an indication message for a call connection between the terminal and the target terminal;
in a case that the direct link to the terminal is not available:
identifying a second satellite capable of forming a direct link with the satellite, and
transmitting, to the second satellite, the indication message.

9. The method of claim 8,
wherein the indication message includes at least one of identification information of the satellite, identification information of the target satellite, identification information of the terminal, identification information of the target terminal, beam information of the satellite, or beam information of the target satellite.

10. The method of claim 8,
wherein the indication message includes direction information indicating a direction vector from the satellite to the target satellite.

11. The method of claim 8,
wherein the indication message includes a list of satellites on a path from the satellite to the target satellite.

12. The method of claim 8,
wherein the indication message includes information on a first successor satellite that will provide service to a first footprint of the satellite, and information on a second successor satellite that will provide service to a second footprint of the target satellite.

13. The method of claim 12,
wherein the information on the first successor satellite includes at least one of identification information of the first successor satellite, beam information of the first successor satellite, cell information of the first successor satellite, or information on a time during which the first successor satellite stays in the first footprint of the satellite, and
wherein the information on the second successor satellite includes at least one of identification information of the second successor satellite, beam information of the second successor satellite, cell information of the second successor satellite, or information on a time during which the second successor satellite stays in the second footprint of the target satellite.

14. The method of claim 8,
wherein the request message includes identification information of the terminal and identification information of the target terminal.

15. A non-transitory storage medium comprising:
memory storing instructions,
wherein the instructions, when executed by a processor of the satellite, cause the satellite to:
receive, from a terminal, a request message for a call connection;
identify a target satellite corresponding to a target terminal of the request message;
determine whether a direct link to the target terminal is available or not;
in a case that the direct link to the terminal is available, transmit, to the target satellite, an indication message for a call connection between the terminal and the target terminal;
in a case that the direct link to the terminal is not available:
identify a second satellite capable of forming a direct link with the satellite, and transmit, to the second satellite, the indication message.
